# EUROPEAN PATENT APPLICATION

(11) **EP 4 006 573 A1**
(43) Date of publication of application: **01.06.2022**
(21) Application number: 21209474.2
(22) Date of filing: 22.11.2021
(51) Int. Cl.: G01S 7/12, G01S 13/86, G01S 13/95, G01S 13/937

(54) **IMPROVED RADAR DISPLAY FEATURES**

(30) Priority: 30.11.2020 US 202017106280
(71) Applicant: Navico Holding AS, 4370 Egersund (NO)
(72) Inventor: Neumann, Karl Thomas, Marina del Rey, 90292 (US); Bates, Laurence T, 0622 Auckland (NZ)
(74) Representative: Hewett, Jonathan Michael Richard

(57) **Abstract**

A system for the display of radar returns is provided. The system comprises a radar configured to provide radar data, a processor, and a display configured to present the radar data. The system comprises memory including computer program code configured to, when executed, cause the processor to receive the radar data, wherein an object is represented within the radar data; receive additional data from a data source other than the radar; and determine object characteristic(s) of the object using the radar data and additional data, wherein the object characteristic(s) comprises a position, a velocity, an intensity, or an object classification of one or more objects. The computer program code is also configured to cause the processor to cause presentation of the radar data including a representation of the object and an indication of the corresponding object characteristic(s). A marine electronic device and a non-transitory computer readable medium are also provided.

## Description

### FIELD OF THE INVENTION

Embodiments of the present invention relate generally to the presentation of radar data to a user in a manner that is readily understandable and to the systems and methods for developing and presenting information to a user in an understandable manner.

### BACKGROUND OF THE INVENTION

Radar is used in conjunction with watercraft, and data created by this radar may be presented on a display within the watercraft. The presentation of the radar data within a display, however, is often limited in several respects and/or difficult to interpret. A large amount of radar data may be presented for the various objects that are in proximity to a watercraft. Where the display presents radar data for multiple objects, and it may be difficult to distinguish between the objects. Further, where a large number of objects are represented within the display, a user may not be able to locate or pick out important objects or objects that may be on course to come in contact with the watercraft. Moreover, the radar may detect a wide variety of objects, and a user may have difficulty in distinguishing between one type of object and another, such as a land mass and an approaching storm. In this regard, the interpretation of radar data often requires a significant amount of knowledge and experience, so novice users may particularly have difficulty in interpreting radar data presented on displays.

### BRIEF SUMMARY OF THE INVENTION

The system may beneficially use artificial intelligence to assist in interpreting and presenting radar data. The radar data may include representations of various objects, and these objects have various characteristics such as the type of object, speed, direction, position, etc. One or more processors may refine a model for determining the object characteristics using known historical comparisons between the radar data and additional data. The system may revise an initial hypothesized model, or the system may develop a new model based on provided data. The system may evaluate data and manipulate the weight to be provided for each type of input data to improve the accuracy of the model. Once the model is sufficiently refined so that the model may predict the characteristics about objects within radar data within a desired degree of accuracy, the model may be employed to determine object characteristics in normal operation. The model may use radar data from radar returns and additional data from other sources such as sonar transducers, a sensor associated with a motor, map data saved in memory, etc. Various object characteristics such as the type of object, the intensity of the object (such as the intensity of a storm or the velocity of wind in a squall), the position and/or outline of the object, direction of travel of the object relative to the watercraft, and the velocity of the object may be predicted using artificial intelligence techniques. By utilizing artificial intelligence, all users (novices to experts) may benefit from the experience of the models. Importantly, this may equip a user with easy to understand and easy to reference knowledge of the radar returns, giving even a novice user the benefits that normally require extensive experience.

Example systems may beneficially determine expected object characteristics by accounting for several different types of data, and the developed model may assign different weights to different types of data. In some systems, even after the model is deployed, the system may beneficially improve the developed model by analyzing further data points. Embodiments described herein also allow for the use of artificial intelligence to verify the accuracy of radar data. For example, radar data can be compared to additional data such as geographical data stored within the system's memory, and the system may present warnings about potential inaccuracy within the radar. By being able to verify the accuracy of radar data, the system may also allow for greater accuracy in the provision of warnings, reducing the number of false alarms and preventing excessive deviations from the planned navigational path for the watercraft.

Artificial intelligence may also be used to make radar warnings. Models may be developed to determine the predicted paths of the watercraft and of other objects around the watercraft by comparing radar data and additional data. Further, models may be developed through the use of artificial intelligence to determine a recommended path for a watercraft where objects are likely to fall within the current path of a watercraft. This may advantageously assist in avoiding any dangerous contact with other objects. In some embodiments, an algorithmic approach may be utilized to determine object characteristics, predicted paths, and other information in a display, etc., such as with or without the use of artificial intelligence.

In some embodiments, improved displays are provided that allow users to provide the necessary information to users in a readily understandable format. By improving the display, the user may quickly review the display and make well-informed navigational decisions. The improved display features are particularly helpful for inexperienced users. The system may emphasize the representations of objects within the display so that the user may quickly identify objects of importance or objects that may meet some defined criteria. Further, the system may present the representations of objects in the display in different colors based on the type of object; for example, all watercraft may be illustrated in one color while all land masses may be illustrated in another color. These improved display features may be provided in conjunction with artificial intelligence techniques and/or algorithmic approaches so that object characteristics and predicted paths may be determined and presented in a clear manner. For example, the artificial intelligence techniques may assist in providing an accurate outline for the representation of an object in the display.

In some embodiments, the improved displays may present information about the expected paths of the watercraft and of one or more objects represented in the display. The improved displays may also present information about the corrective actions that may be taken to avoid objects and/or an expected path of the watercraft if the corrective action is taken. By presenting this information and presenting warnings about objects that fall within the path of the watercraft, the display may allow for quick and accurate adjustments to be made to help avoid dangerous contact with other objects.

In an example embodiment, a system for display of radar data is provided. The system comprises a radar configured to provide radar data, a processor, a display configured to present the radar data, and a memory. The memory includes computer program code that is configured to, when executed, cause the processor to receive the radar data, wherein an object is represented within the radar data. The computer program code is further configured to receive additional data from a data source other than the radar and to determine one or more object characteristics of the object using the radar data and the additional data. The one or more object characteristics comprises at least one of a type of the object, a direction the object is heading, or a velocity of the object. The computer program code is further configured to cause presentation of the radar data including a representation of the object and an indication associated with the representation of the object. The indication details the one or more object characteristics corresponding to the object, and the indication is presented in relation to the object.

In some embodiments, the additional data comprises at least one of humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, or geographical data. The one or more objects may comprise at least one of a land mass, a cloud, a wind concentration, a rainstorm, a thunderstorm, or a floating object. Additionally, the memory including computer program code may be further configured to, when executed, cause the processor to cause presentation of the indication of the one or more object characteristics for the object in a first window along with the radar data, and this presentation may be completed such that the indication of the one or more object characteristics is presented proximate to the representation of the object.

In some embodiments, the display comprises at least a first area, and the computer program code is further configured to, when executed, cause presentation of the radar data in a first window within the first area and cause presentation of the indication of the one or more object characteristics in a second window within the first area.

In some embodiments, the display comprises at least a first area and a second area, with the first area being separate from the second area. The computer program code is further configured to, when executed, cause presentation of the radar data in the first area and cause presentation of the indication of the one or more object characteristics in the second area.

In some embodiments, the one or more object characteristics comprises at least two object characteristics, wherein the computer program code is configured to, when executed, cause the processor to (a) cause presentation of the indication of a first characteristic for the object on the display, (b) receive an indicator that the user has selected the object within the display, and (c) cause, in response to receiving the indicator, the presentation of an indication of a second object characteristic for the object on the display. The processor may be configured to utilize a model developed through artificial intelligence, and the model may be formed based on historical comparisons of additional data and the radar data. This processor may be configured to input the radar data and the additional data into the model to determine the one or more object characteristics.

In some embodiments, the computer program code is configured to, when executed, cause the processor to cause presentation of the indication of the one or more object characteristics. This may be done by (a) causing the presentation of the representation of the object and hiding a representation of a second object on the display, (b) changing color of the representation of the object in the display, (c) changing color of an outline surrounding the representation of the object in the display, (d) bringing the representation of the object in front of a representation of another object in the display, or (e) presenting textual or graphical information about the one or more object characteristics.

In some embodiments, the system is configured to be implemented on a watercraft. Additionally, computer program code is configured to, when executed, cause the processor to calculate a first expected path of the watercraft, calculate an expected object path of the object, and determine whether the expected object path intersects with the first expected path of the watercraft. The computer program code is also configured to, when executed, cause the processor to perform at least one of the following tasks: (a) cause the presentation of a warning that the object is predicted to be located within the first expected path of the watercraft on the display, (b) cause emphasis of the object that will be located within the first expected path of the watercraft on the display, (c) cause presentation of the first expected path of the watercraft on the display, or (d) determine a corrective action using at least one of the radar data or the additional data, where the corrective action includes determination of a second expected path of the watercraft and where the expected object path does not intersect with the second expected path of the watercraft, and also cause the processor to present information about at least one of the corrective action or the second expected path of the watercraft on the display.

In another example embodiment, a marine electronic device for the display of radar data is provided. The marine electronic device comprises a processor, a display configured to present radar data, and a memory. The memory includes computer program code that is configured to, when executed, cause the processor to perform several tasks. These tasks include (a) receiving the radar data, where an object is represented within the radar data, (b) receiving additional data from a data source other than a radar, and (c) determining one or more object characteristics of the object using the radar data and the additional data, where the one or more object characteristics comprises at least one of a type of the object, a direction the object is heading, or a velocity of the object. The tasks also include causing presentation of the radar data including a representation of the object and causing presentation of an indication associated with the representation of the object, where the indication details the one or more object characteristics corresponding to the object and where the indication is presented in relation to the object.

In some embodiments, the additional data comprises at least one of humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, or geographical data. The one or more objects may comprise at least one of a land mass, a cloud, a wind concentration, a rainstorm, a thunderstorm, or a floating object. In some embodiments, the computer program code is further configured to, when executed, cause the processor to cause presentation of the indication of the one or more object characteristics for the object in a first window along with the radar data and such that the indication of the one or more object characteristics is presented proximate to the representation of the object.

In some embodiments, the display comprises at least a first area, where the memory including computer program code is further configured to, when executed, cause presentation of the radar data in a first window within the first area and presentation of the indication of the one or more object characteristics in a second window within the first area.

In some embodiments, the display comprises at least a first area and a second area, with the first area being separate from the second area. The memory including computer program code is further configured to, when executed, cause presentation of the radar data in the first area and presentation of the indication of the one or more object characteristics in the second area.

In some embodiments, the processor is configured to utilize a model developed through artificial intelligence, with the model being formed based on historical comparisons of additional data and the radar data and with the processor being configured to input the radar data and the additional data into the model to determine one or more object characteristics. In some embodiments, the computer program code is configured to, when executed, cause the processor to cause presentation of the indication of the one or more object characteristics. This may be done by (a) causing the presentation of the object and hiding a second object on the display, (b) changing color of the object in the display, (c) changing color of an outline surrounding the object in the display, (d) bringing the representation of the object in front of other objects in the display, or (e) presenting textual or graphical information about the one or more object characteristics.

In some embodiments, the marine electronic device is configured to be implemented on a watercraft and wherein the computer program code is configured to, when executed, cause the processor to calculate a first expected path of the watercraft, calculate an expected object path of the object, and determine whether the expected object path intersects with the first expected path of the watercraft. The computer program code is also configured to cause the processor perform at least one of the following tasks: (a) cause the presentation of a warning that the object is predicted to be located within the first expected path of the watercraft on the display, (b) cause emphasis of the object that will be located within the first expected path of the watercraft on the display, (c) cause presentation of the first expected path of the watercraft on the display, or (d) determine a corrective action using at least one of the radar data or the additional data, where the corrective action includes determination of a second expected path of the watercraft and where the expected object path does not intersect with the second expected path of the watercraft, and cause the processor to present information about at least one of the corrective action or the second expected path of the watercraft on the display.

In yet another example embodiment, a non-transitory computer readable medium is provided having stored thereon software instructions that, when executed by a processor, cause the processor to generate display data. This is done by executing the steps comprising receiving radar data, where an object is represented within the radar data, receiving additional data from a data source other than a radar, and determining one or more object characteristics of the object using the radar data and the additional data, where the one or more object characteristics comprises at least one of a type of the object, a direction the object is heading, or a velocity of the object. The software instructions also cause the processor to cause (a) presentation of the radar data including a representation of the object and (b) an indication associated with the representation of the object, where the indication details the one or more object characteristics corresponding to the object and where the indication is presented in relation to the object.

While alphabetical labels have been provided to list certain operations above, these alphanumeric labels are presented only to provide further clarity in the text above. These labels are not intended to limit the scope of the embodiments herein, and they are not intended to indicate that operations must be performed in a specific order.

### BRIEF DESCRIPTION OF THE DRAWINGS

Having thus described the invention in general terms, reference will now be made to the accompanying drawings, which are not necessarily drawn to scale, and wherein:
FIG. 1 illustrates an example watercraft including various marine devices, in accordance with some embodiments discussed herein;
FIG. 2 illustrates a flowchart of an example method of machine learning, in accordance with some embodiments discussed herein;
FIG. 3A-3D illustrate various views of an example display with radar data and representations of one or more objects, in accordance with some embodiments discussed herein;
FIG. 4 illustrates a schematic view of an example display with radar data and representations of one or more objects, in accordance with some embodiments discussed herein;
FIGS. 5A-5D illustrate schematic views of example displays with radar data and representations of one or more objects, wherein indications of the object characteristics are also provided, in accordance with some embodiments discussed herein;
FIGS. 6A-6D illustrate schematic views of example displays with radar data and representations of one or more objects, wherein the representation of one object is emphasized, in accordance with some embodiments discussed herein;
FIGS. 7A-7E illustrate schematic views of example displays with radar data and representations of one or more objects, wherein various approaches for corrective actions are illustrated, in accordance with some embodiments discussed herein;
FIG. 8 illustrates a block diagram of an example system with various electronic devices, marine devices, and secondary devices shown, in accordance with some embodiments discussed herein;
FIGS. 9A-9F illustrate flowcharts with example methods of presenting one or more object characteristics in a display, in accordance with some embodiments discussed herein;
FIGS. 9G-9J illustrate flowcharts with example methods of presenting one or more object characteristics in a display, with the representation of one object being emphasized, in accordance with some embodiments discussed herein; and
FIGS. 9K-9M illustrate flowcharts with example methods of presenting one or more object characteristics in a display and with various approaches for implementing a corrective action, in accordance with some embodiments discussed herein.

### DETAILED DESCRIPTION

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. Like reference numerals refer to like elements throughout.

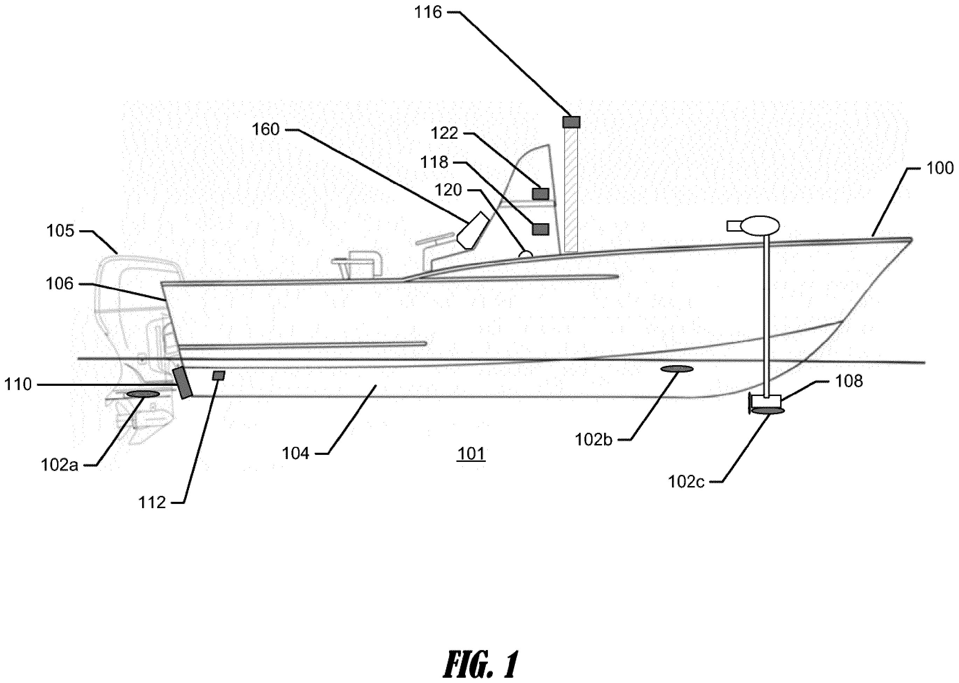

FIG. 1 illustrates an example watercraft 100 including various marine devices, in accordance with some embodiments discussed herein. As depicted in FIG. 1, the watercraft 100 (e.g., a vessel) is configured to traverse a marine environment, e.g. body of water 101, and may use one or more sonar transducer assemblies 102a, 102b, and 102c disposed on and/or proximate to the watercraft. Notably, example watercraft contemplated herein may be surface watercraft, submersible watercraft, or any other implementation known to those skilled in the art. Transducer assemblies 102a, 102b, and 102c may also be provided. The transducer assemblies 102a, 102b, and 102c may each include one or more transducer elements (such as in the form of the example arrays described herein) configured to transmit sound waves into a body of water, receive sonar returns from the body of water, and convert the sonar returns into sonar return data.

Depending on the configuration, the watercraft 100 may include a primary motor 105, which may be a main propulsion motor such as an outboard or inboard motor. Additionally, the watercraft 100 may include a trolling motor 108 configured to propel the watercraft 100 or maintain a position. The one or more transducer assemblies (e.g., 102a, 102b, and/or 102c) may be mounted in various positions and to various portions of the watercraft 100 and/or equipment associated with the watercraft 100. For example, the transducer assembly may be mounted to the transom 106 of the watercraft 100, such as depicted by transducer assembly 102a. The transducer assembly may be mounted to the bottom or side of the hull 104 of the watercraft 100, such as depicted by transducer assembly 102b. The transducer assembly may be mounted to the trolling motor 108, such as depicted by transducer assembly 102c.

The watercraft 100 may also include one or more marine electronic devices 160, such as may be utilized by a user to interact with, view, or otherwise control various aspects of the various sonar systems described herein. In the illustrated embodiment, the marine electronic device 160 is positioned proximate the helm (e.g., steering wheel) of the watercraft 100 - although other places on the watercraft 100 are contemplated. Likewise, additionally or alternatively, a user's mobile device may include functionality of a marine electronic device.

The watercraft 100 may also comprise other components within the one or more marine electronic devices 160 or at the helm. In FIG. 1, the watercraft 100 comprises a radar 116, which is mounted at an elevated position (although other positions relative to the watercraft are also contemplated). The watercraft 100 also comprises an AIS transceiver 118, a direction sensor 120, and a camera 122, and these components are each positioned at or near the helm (although other positions relative to the watercraft are also contemplated). Additionally, the watercraft 100 comprises a rudder 110 at the stern of the watercraft 100, and the rudder 110 may be positioned on the watercraft 100 so that the rudder 110 will rest in the body of water 101. In other embodiments, these components may be integrated into the one or more electronic devices 160 or other devices. Another example device on the watercraft 100 includes a temperature sensor 112 that may be positioned so that it will rest within or outside of the body of water 101. Other example devices include a wind sensor, one or more speakers, and various vessel devices/features (e.g., doors, bilge pump, fuel tank, etc.), among other things. Additionally, one or more sensors may be associated with marine devices; for example, a sensor may be provided to detect the position of the primary motor 105, the trolling motor 108, or the rudder 110.

### Example Use of Artificial Intelligence

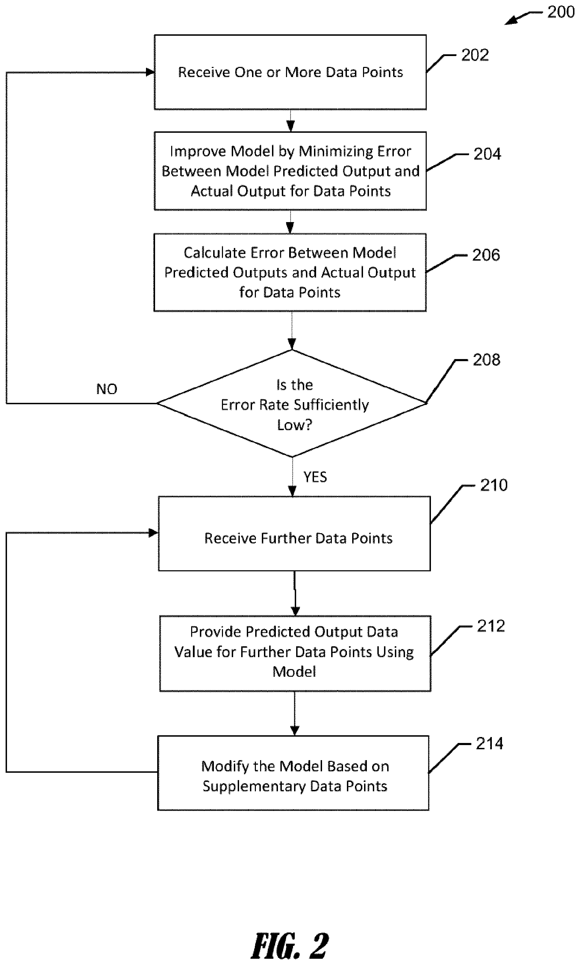

FIG. 2 is a flowchart of an example method 200 of machine learning, such as may be utilized with artificial intelligence for various embodiments of the present invention. At least one processor or another suitable device may be configured to develop a model for the calculation of object characteristics such as described herein in various embodiments. In this regard, the developed model may be deployed and utilized to determine object characteristics for one or more objects that are represented within radar data.

This system may beneficially determine the expected object characteristics by accounting for radar data and different types of additional data, and the developed model may assign different weights to different types of data that are provided. In some systems, even after the model is deployed, the systems may beneficially improve the developed model by analyzing further data points. By utilizing artificial intelligence, a novice user may benefit from the experience of the models utilized - making marine activities more user friendly and accessible/successful for beginners. Embodiments beneficially allow for accurate information to be provided about the objects represented within radar data and also allow for information about these objects to be shared with the user in the display so that the user may make well-informed decisions. In some embodiments, the method 200 may determine an expected path for the watercraft, an expected path for one or more objects that are represented in the radar data, and appropriate corrective actions that a watercraft may take to avoid contact with one or more objects that are represented in radar data. The method may be used to predict other navigational information as well. By enabling object characteristics to be determined quickly and accurately and by enabling the analysis and decision-making tools described herein, the artificial intelligence techniques may present more meaningful information in a display. Additionally, the techniques may also enable displays that allow novice users to quickly and easily decipher radar data. Utilization of the model may prevent the need for a user to perform calculations for long periods of time about the best navigational course, freeing the user to perform other tasks and enabling performance and consideration of complex computations that the user could not otherwise solve on their own (e.g., the systems described herein may also be beneficial for even the most experienced users).

By receiving several different types of data, the example method 200 may be performed to generate complex models. The example method 200 may find relationships between different types of data that may not have been anticipated. By detecting relationships between different types of data, the method 200 may generate accurate models even where a limited amount of data is available.

In some embodiments, the model may be continuously improved even after the model has been deployed. Thus, the model may be continuously refined based on changes in the systems or in the environment over time, which provides a benefit as compared with other models that stay the same after being deployed. The example method 200 may also refine the deployed model to fine-tune the weights that are provided to various types of data based on subtle changes in the watercraft and/or the environment. Where certain parts of the watercraft are replaced, modified, or damaged or where there are swift changes in the environment, the method 200 may continuously refine a deployed model to quickly account for the changes and provide a revised model that is accurate. By contrast, where a model is not continuously refined, changes to the watercraft or the surrounding environment may make the model inaccurate until a new model may be developed and implemented, and implementation of a new model may be very costly, time-consuming, and less accurate than a continuously refined model.

At operation 202, one or more data points are received. These data points may or may not be the initial data points being received. These data points will preferably comprise known data on a desired object characteristic or another characteristic that the model will be used to predict. The characteristic may be selected for a specific characteristic such as a position, an angle, a distance, etc. related to an object. For example, where the model is being generated to provide an expected characteristic for the position of an object, the data points provided at operation 202 will preferably comprise known data for the position of the object. The data points provided at operation 202 will preferably be historical data points with verified values to ensure that the model generated will be accurate. The data points may take the form of discrete data points. For example, the data may provide the specific location of an object in terms of latitude and longitude. However, where the data points are not known at a high confidence level, a calculated data value may be provided, and, in some cases, a standard deviation or uncertainty value may also be provided to assist in determining the weight to be provided to the data value in generating a model. In this regard, the model predicted object characteristic or the expected object characteristic may be formed based on historical comparisons of the radar data and additional data. One example of appropriate historical comparisons would be comparing geographical data from maps or nautical charts with radar return data.

At operation 204, a model is improved by minimizing error between a predicted object characteristic generated by the model and an actual object characteristic for data points. In some embodiments, an initial model may be provided or selected by a user. The user may provide a hypothesis for an initial model, and the method 200 may improve the initial model. However, in other embodiments, the user may not provide an initial model, and the method 200 may develop the initial model at operation 204, such as during the first iteration of the method 200. The process of minimizing error may be similar to a linear regression analysis on a larger scale where three or more different variables are being analyzed, and various weights may be provided for the variables to develop a model with the highest accuracy possible. Where a certain variable has a high correlation with the actual object characteristic, that variable may be given increased weight in the model. For example, where data from maps or nautical charts are available, that data may be provided alongside with radar data, and the model may be optimized to give the map data its appropriate weight. In refining the model by minimizing the error between the predicted object characteristic generated by the model and the actual or known object characteristic, the component performing the method 200 may perform a very large number of complex computations. Sufficient refinement results in an accurate model may accordingly be developed.

In some embodiments, the accuracy of the model may be checked. For example, at operation 206, the accuracy of the model is determined. This may be done by calculating the error between the model predicted object characteristic generated by the model and the actual object characteristic from the data points. In some embodiments, error may also be calculated before operation 204. By calculating the accuracy or the error, the method 200 may determine if the model needs to be refined further or if the model is ready to be deployed.

At operation 208, a determination is made as to whether the calculated error is sufficiently low. A specific threshold value may be provided in some embodiments. For example, where the object characteristic is an angle, the threshold may be 0.1 degrees, and the calculated error may be sufficiently low if the average error is less than or equal to 0.1 degrees. However, other threshold values may be used, and the threshold value may be altered by the user in some embodiments. If the error rate is not sufficiently low, then the method 200 may proceed back to operation 202 so that one or more additional data points may be received. If the error rate is sufficiently low, then the method 200 proceeds to operation 210. Once the error rate is sufficiently low, the training phase for developing the model may be completed, and the implementation phase may begin where the model may be used to predict the expected object characteristic.

By completing operations 202, 204, 206, and 208, a model may be refined through machine learning utilizing artificial intelligence based on the historical comparisons of additional data and radar data and based on known deviations of the radar data for the historical comparisons. Notably, example model generation and/or refinement may be accomplished even if the order of these operations is changed, if some operations are removed, or if other operations are added.

During the implementation phase, the model may be utilized to provide a determined object characteristic. An example implementation of a model is illustrated from operations 210-212. In some embodiments, the model may be modified (e.g., further refined) based on the received data points, such as at operation 214.

At operation 210, further data points are received. For these additional data points, the object characteristic may not be known. At operation 212, the model may be used to provide a predicted output data value for the additional data points. Thus, the model may be utilized to determine the object characteristic.

At operation 214, the model may be modified based on supplementary data points, such as those received during operation 210 and/or other data points. For example, the model may be refined utilizing the radar data, additional data, and the determined object characteristics, such as described herein. By providing supplementary data points, the model can continuously be improved even after the model has been deployed. The supplementary data points may be the further data points received at operation 210, or the supplementary data points may be provided to the processor from some other source. In some embodiments, the processor(s) or other component performing the method 200 may receive additional data from secondary devices and verify additional data points received at operation 210 using this additional data. By doing this, the method 200 may prevent errors in the additional data points from negatively impacting the accuracy of the model.

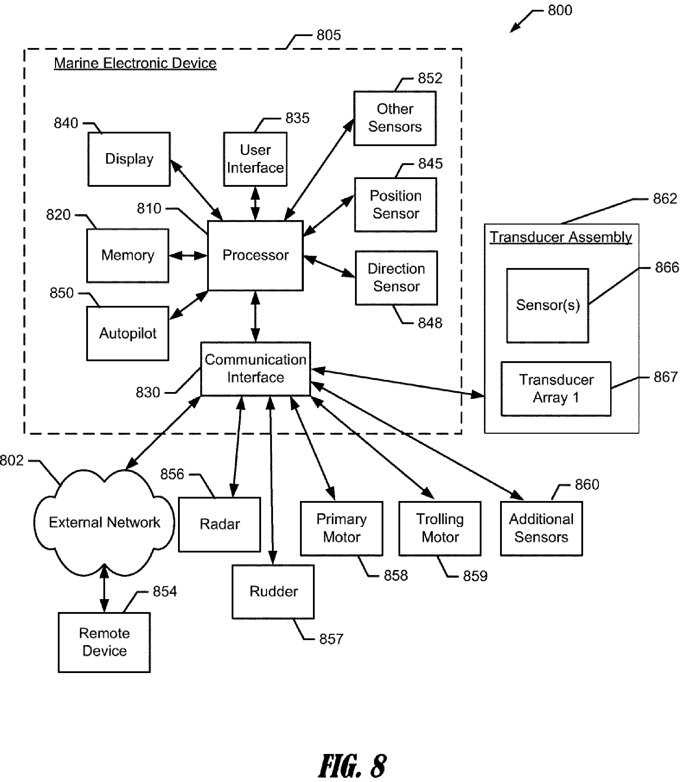

In some embodiments, supplementary data points are provided to the processor from some other source and are utilized to improve the model. For example, supplementary data points may be saved to a memory 820 (FIG. 8) associated with at least one processor 810 via communication interface 830, or the supplementary data points may be sent through the external network 802 from a remote device 854. These supplementary data points may be verified before being provided to the at least one processor 810 to improve the model, or the at least one processor 810 may verify the supplementary data points utilizing additional data.

As indicated above, in some embodiments, operation 214 is not performed and the method proceeds from operation 212 back to operation 210. In other embodiments, operation 214 occurs before operation 212 or simultaneous with operation 212. Upon completion, the method 200 may return to operation 210 and proceed on to the subsequent operations.

The predicted output data values of the model may be compared to data being received from one or more devices when the watercraft is in operation. In this way, the model may be used to detect any issues within the marine devices and ensure that these devices are each functioning properly. In some situations, where predicted output data value varies from the actual data received from a particular marine device by a sufficient amount, a correction may be automatically made to the marine device or a prompt may be provided to a user to recommend a correction. The training phase performed at operations 202, 204, and 206 (and which may be continued at operations 210 and 214) may beneficially identify patterns or correlations in the data points, identifying where certain factors should be given an increased weight or a reduced weight.

Methods for the use of artificial intelligence may generally be used in accordance with some embodiments discussed herein. One or more data points are received. Then, the data points may be evaluated to identify patterns within the data, and this evaluation may also entail an assessment of the patterns. The patterns may be assessed to evaluate the strength of the recognized pattern, which may be provided in some cases in the form of a correlation coefficient. In some embodiments, an assessment may be made as to whether the newly received data points deviate significantly from the patterns.

After data points are evaluated, a determination may be made as to whether the pattern within the data is acceptable. This may involve a determination that a newly received data point deviates significantly from the recognized pattern. Alternatively, a determination may be made that only a weak correlation or no correlation can be found in the data. Other determinations may also be made. If the pattern is determined to be acceptable, then the new data points may be evaluated, and the methods may be repeated. If the pattern is not acceptable for some reason, then a corrective action may be taken. This corrective action may simply be a notification to the user that the pattern is not acceptable. The notification may come in various forms. For example, an audible notification may be provided through a speaker, a buzzer, or some other sound device. Alternatively, the notification may be presented on a display or via a signal light. A notification may be presented with detailed information about the pattern and an identified issue, or the notification may be presented upon detection of a general issue with the pattern so that the user may investigate the pattern and/or the data. The notification may be provided in several other alternative ways. In some embodiments, such as described herein, the corrective action may be a physical adjustment to a marine device, a data adjustment generated from a marine device or from another source, or some other action to troubleshoot issues with a marine device such as radar.

### Example Determinations and Data Usage

As indicated herein, in some embodiments, the system may be configured to determine one or more object characteristics of an object represented within radar data. The system may determine the one or more object characteristics through the use of the artificial intelligence techniques described above, or the system may determine these object characteristics through other approaches, such as through an algorithmic approach.

In some embodiments, the system may be configured to determine that an object is within the radar data. For example, the radar data may include various radar signal returns that comprise an amplitude, a time of flight (e.g., time of reflection of the signal), a receipt time (e.g., when the radar signal was received), and an angular direction (e.g., relative to the direction of the radar (and, for example, the watercraft)). Individual radar signal returns may be captured in memory and used to identify objects within the radar data. In some embodiments, a cluster of similar radar signal returns may be used to determine occurrence of an object (e.g., via the amplitude and angular direction/time of flight). In some embodiments, relative movement of a grouping of radar signal returns across different receipt times may be used to determine an object within the radar data. In some embodiments, additional data (e.g., automatic identification system (AIS) data, weather data, other radar data, historical data, chart data, etc.) may be used to determine that a group of radar signal returns correspond to an object within the radar data.

Once the object is determined, the system may utilize additional data to determine one or more object characteristics (e.g., the type of object, velocity of the object, etc.). For example, data points may comprise radar data and/or other additional data (including historical data); and the data points may be provided to develop a model that may predict object characteristics for objects that are represented in the radar data. For example, where the desired object characteristic is the object type for objects that are represented in a display, radar data may be provided alongside other additional data such as weather data, data from maps and nautical charts, and AIS data. Various types of additional data may be provided - for example, humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, and/or geographical data may be provided. Using the radar data and the additional data, the system may determine the type of object that is being represented within the display.

In some instances, determining the type of object may be difficult as two or more objects may be located at the same position. For example, another watercraft and a storm may both be located at the same position in terms of longitude and latitude. Where two or more objects are located at the same position, this may cause the radar data presented in the display at that location to have a high intensity relative to other locations within the display. Through the use of the additional data from sources such as an AIS and weather data that is provided through an external network, known values may be determined for the location and the outline of the objects. Weather data may come in the form of external weather forecast data. Additional data may be provided from other sources as well, such as a water current sensor, an anemometer (wind sensor), a temperature sensor, a camera with associated processing circuitry that performs image recognition techniques, an air pressure sensor, etc. This additional data may be used alongside the available radar data to develop and improve a model that may predict the outline of the objects and distinguish between the two different types of objects. As a greater amount of data points are provided to the model, the accuracy of the model may be further improved.

In some embodiments, known historical data may be provided to help improve the model. For example, known historical data may be provided for the location of a landmark such as a lighthouse, and the model generated outline for the lighthouse may be compared to the actual position of the lighthouse. By providing sufficient data to the model, the model may be improved over time. Data from geographical maps, nautical charts, and weather data may also be compared to radar data to determine the object type by a process of elimination. For example, where radar data detects an object, and that object is not found within geographical maps, nautical charts, or weather data, the model may determine by process of elimination that the object is a watercraft or some other floating object. As a further example, the system may confirm that an object represented within the display is a weather formation or a storm using previous weather data as well as other types of data such as the region where the watercraft is located, the time of day or time of year, the air pressure, the wind speed, the temperature, etc.

Other object characteristics of various objects represented in the display may also be determined using the developed model. For example, known historical data may be received about the wind speed of squalls at a given time and at a specific location. By comparing this historical data to radar data and other available additional data corresponding to that same time and location, a model may be developed to determine the wind speed. The radar data and the additional data may be real-time data. The additional data that is provided may be weather data that is provided via an external network. The most recent weather data may, for example, be provided for the specific location or for the general area around the watercraft. However, additional data may also be provided as data from an air or water temperature sensor, air or water pressure data, data from an anemometer on the watercraft, the region where the watercraft is located, the time of day or the time of the year, data from previous reports, etc. Radar data may provide information about the location of the squall, past locations of the squall, and the intensity of the squall. The model may be refined by providing more data points or by providing further sensor values for data points. Once the model is sufficiently refined, the model may be deployed to determine the wind speed of a squall that is represented in the radar data using the radar data and other available additional data. The model may beneficially determine the desired object characteristics in real-time using real-time radar data and additional data. Notably, other object characteristics about the weather system may alternatively or additionally be determined. For example, rainfall rates (e.g., using target density), wave height, etc., may be determined.

Where the model is being used to determine the speed of a watercraft or the speed of another type of weather formation, different data types may be more prevalent in the model. For example, for determining the velocity of the watercraft, past locations of the watercraft (which may be provided by an autopilot, a GPS, an AIS or another similar device), the water current velocity, and the wind velocity may have a strong correlation to the actual velocity of the watercraft. However, other data types may also show a correlation and may be considered in the model to improve the accuracy of the model.

Other object characteristics may also be determined for various objects represented within a display. For example, the velocity or the direction that the object is heading may be determined based on (1) a comparison of previously determined locations and the most recently obtained location of the object to determine an object path of the object, wherein the locations are obtained from a source such as AIS or radar; (2) the wind speed at the watercraft of the user or wind speed at the object location; and/or (3) the speed of a water current at the watercraft of the user or the water current speed at the object location. Other data may also be used to determine the velocity and movement direction of the object, such as the region, the time of day and time of year, air pressure, etc.

As another example, various determinable object characteristics may be related to birds within the radar data. For example, the range, bearing, and/or speed of the bird targets may be determined by such example systems. In some embodiments, the type of birds may be determined using additional data, such as the current region, the time of year, speed of the birds, etc.

As yet another example, the determined object characteristics may be specific safety related alerts or data corresponding to the object. For example, the appropriate distance to stay away from the object may be determined and displayed, a corresponding recommended action by the watercraft (e.g., change course, call for help, abide by international rules of the road - such as for a sailboat or a large commercial vessel, etc.) may be determined and displayed, among other things. If there is a corrective action, in some embodiments, the autopilot may be automatically engaged.

Additional data may be provided in various forms to assist with determining different object characteristics. Additional data may be provided in the form of humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, or geographical data. However, other types of data may also be provided. Using the additional data and various data types that are available, an accurate model may be developed. Some data types may have a negligible correlation to a specific object characteristic and may not be considered in the model. However, where a large number of data types are available, the system may beneficially find an unexpected correlation between one data type and a desired object characteristic. Thus, a large number of different data types may preferably be used.

### Example Displays and Features

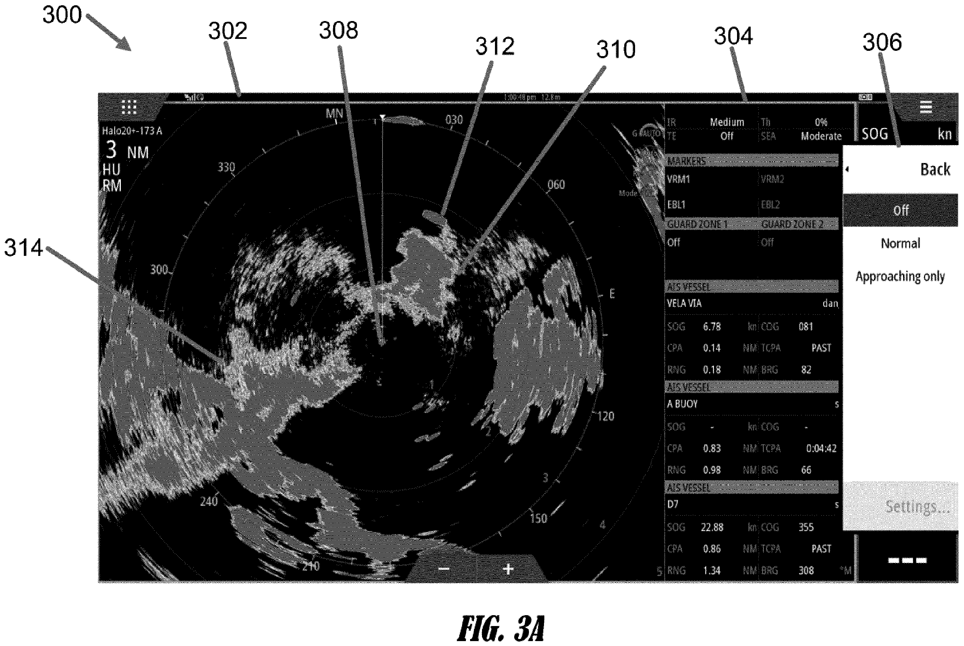

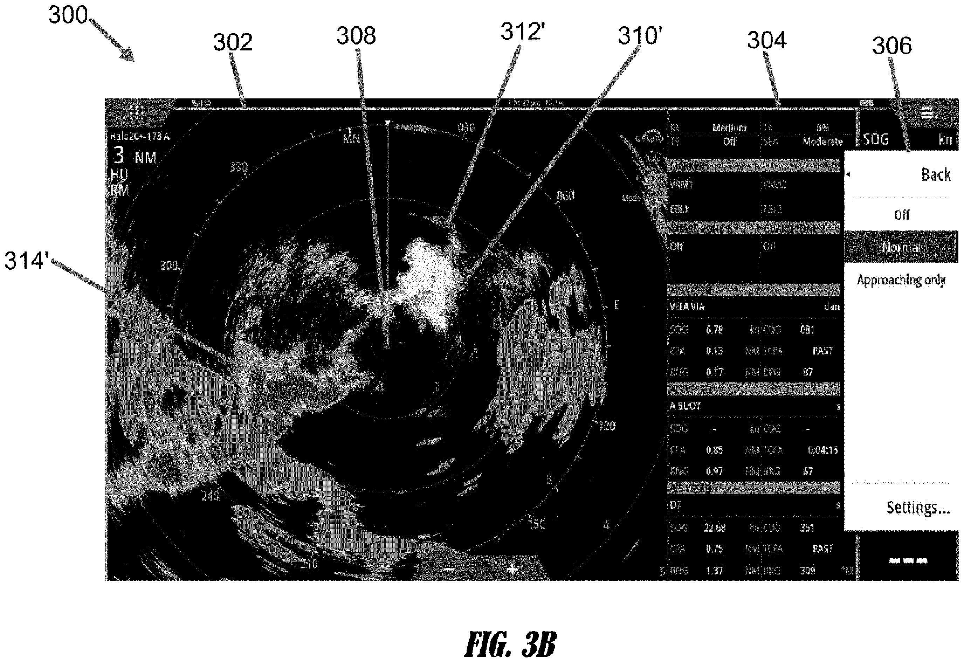

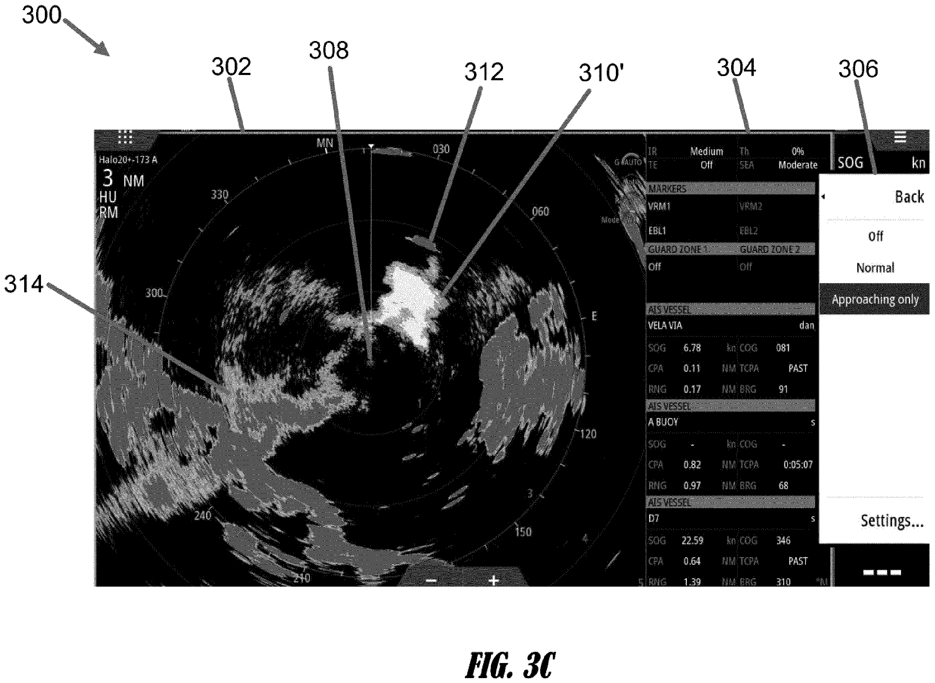

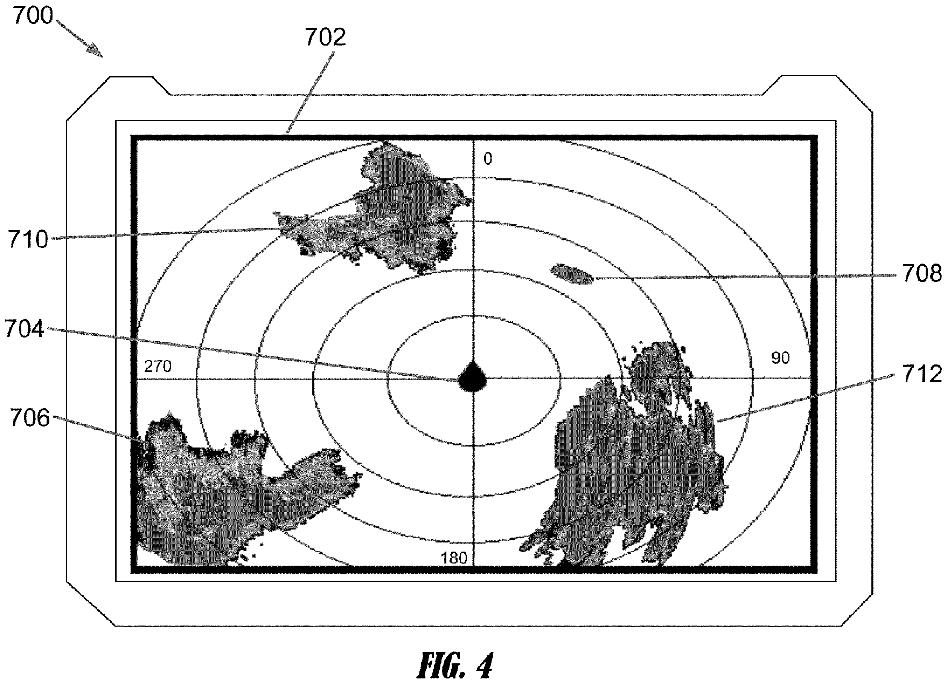

FIGs. 3A, 3B, 3C, and 4 illustrate various views of an example display with radar data and representations of one or more objects. Such example images may be presented on one or more displays associated with a watercraft (e.g., the display 804 described with respect to FIG. 8, a remote display, such as a user's mobile device, etc.). Some such example displays may present radar data as well as other important information about objects represented within the radar data. The displays may present information about objects in a readily understandable manner so that users are equipped to make well-informed decisions, and the displays may help emphasize certain representations of objects and/or distinguish the representations so that the user may quickly and easily interpret the radar data.

FIG. 3A illustrates a view of the example display 300 where example viewing assistance is turned off. Various areas are provided within the display, with a first area 302 presenting radar data, including representations of various objects near the watercraft (indicated by 308), with the second area 304 presenting information about the objects that are within the area around the watercraft (but without linking to the actual radar data), and with the third area 306 providing a menu. A representation of the watercraft of the user 308 is provided at approximately the center of the first area 302, but this representation of the watercraft may be positioned at other locations in other embodiments. In the illustrated embodiment, the forward direction of the watercraft is in the upward direction, and a ring is provided with angular directions shown. A representation of a first object 310 is provided, where the first object is a thunderstorm. A representation of a second object 312 is also provided, with the second object being another watercraft, and a representation of a third object 314 is provided, with the third object being a rainstorm. Other objects may also represented within the first area 302 as well, including, but not limited to, land masses, clouds, wind concentrations or squalls, rainstorms, thunderstorms, and other floating objects such as buoys.

FIG. 3B illustrates a view of the example display 300 where viewing assistance is turned on and is in a normal mode. The viewing assistance may emphasize the representations of various objects, and the viewing assistance mode may distinguish between two different types of objects and present these objects differently. Various representations of objects may be emphasized in the first area 302 if they satisfy certain criteria. The criteria may be predetermined by the system, or a user may change the criteria. In FIG. 3B, the criteria is whether the velocity of the objects represented in the display exceeds a certain threshold, and representations of certain objects change colors based on their velocity relative to the watercraft of the user. The representation of the first object 310', the representation of the second object 312', and the representation of the third object 314' each changed in color as compared FIG. 3A. Further, a different color may be provided for a representation of an object if that object is approaching the watercraft. This is illustrated in FIG. 3B, where the color used to emphasize the representation of the first object 310' is different than the color used to emphasize the representation of the second object 312' and the representation of the third object 314'.

FIG. 3C illustrates a view of the example display where viewing assistance is turned on and is set in a mode where only the representations of approaching objects are emphasized. In this embodiment, the representation of the first object 310' changed in color so that this representation may be emphasized within the display 300.

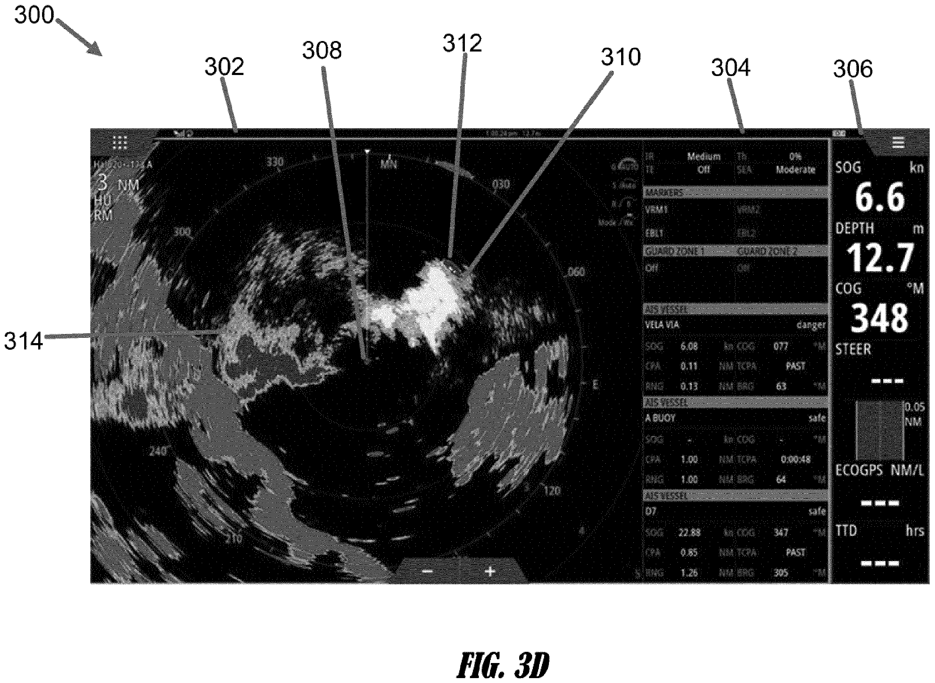

FIG. 3D illustrates a view of the example display where information is provided about the watercraft of the user in the third area 306. This figure illustrates that the display 300 may present a wide variety of information other than simply radar data. In the illustrated embodiment, information is provided about the depth of water at the location where the watercraft is located, the direction of the watercraft, and the speed of the watercraft.

FIGS. 4, 5A-5F, 6A-6D, and 7A-7E illustrate an example display and various views that may be presented on the example display. The improved displays shown in these embodiments may assist novice users to be able to quickly view and synthesize information from the display so that decisions can be made quicker and more accurately. The improved displays of the embodiments present information in a way that is more easily understandable, and in some embodiments, objects of interest or objects meeting a specific criteria may be emphasized within the display. In some embodiments, information may be presented in the display that will notify a user when corrective action is necessary to avoid a collision or to avoid a nearby storm. The improved display may be used in conjunction with the artificial intelligence techniques described herein to promptly and accurately provide the user with information about the environment of the watercraft and the various objects around the watercraft in ways that are easy to understand.

FIG. 4 illustrates the example display 700, wherein the example display 700 is illustrating radar data in a first window 702. Within the first window 702, a representation of the watercraft 704 is illustrated. The representation of the watercraft 704 may be positioned at any location within the first window 702, and the representation of the watercraft 704 may be positioned in the center of the first window 702 in some embodiments. Various other objects may be represented within the first window 702, and these objects may include a land mass, a cloud, a wind concentration or a squall, a rainstorm, a thunderstorm, or a floating object such as a watercraft. In FIG. 4, a representation of a first object 706, a representation of a second object 708, a representation of a third object 710, and a representation of a fourth object 712 are illustrated. In this embodiment, the first object 706 is a rainstorm, the second object 708 is another watercraft, the third object 710 is a thunderstorm, and the fourth object 712 is a squall.

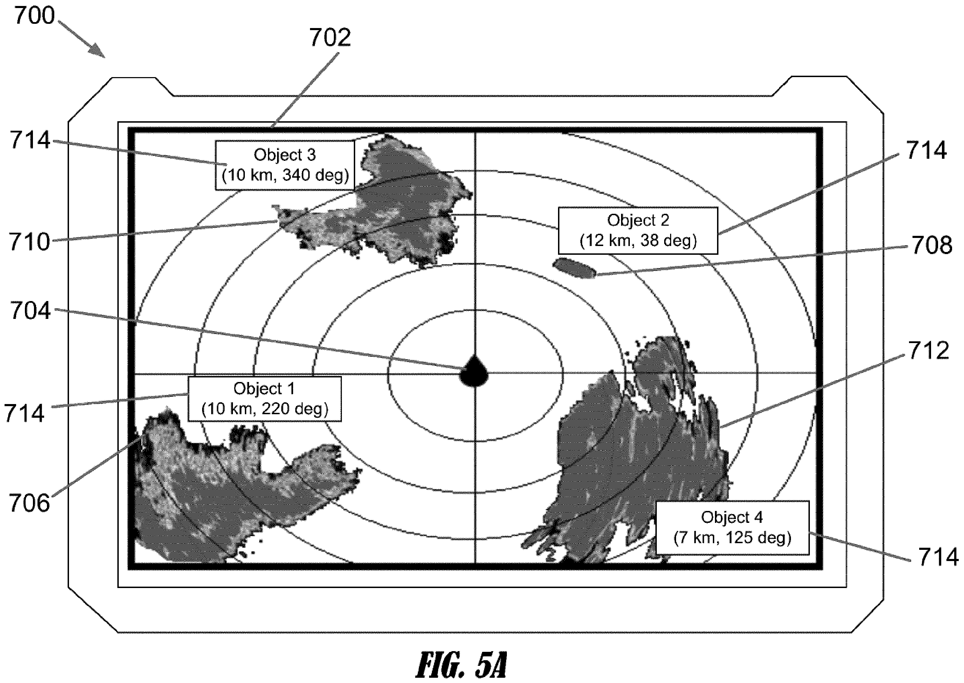

FIGS. 5A-5D present various embodiments with different approaches for providing information about the objects that are represented within the display 700. As demonstrated herein, this information may be provided in a variety of ways, and other approaches may be adopted for providing information about the objects that are represented within the display. FIG. 5A presents an example display 700 with indications 714 provided of characteristics for the various objects that are illustrated in the first window 702. In FIG. 5A, the distance of the objects from the watercraft is indicated. Additionally, the angle of the objects relative to the forward direction of the watercraft is also indicated. In FIG. 5A, the indications 714 are provided automatically without any need for user input. However, in other embodiments, such as in FIG. 4, no indication is provided, and additional information may be presented only upon a user input requesting that information. In FIG. 5A, the indications 714 of object characteristics are presented in the first window 702 along with radar data so that the indications 714 are presented proximate to the representation of the relevant object.

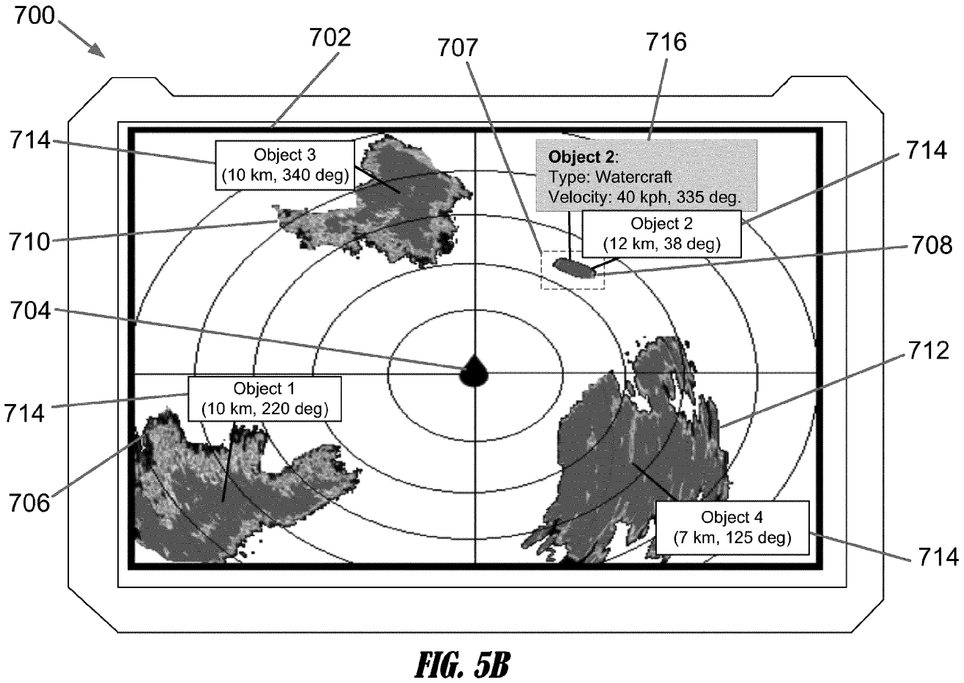

FIG. 5B presents an example display 700 with a second window 716 that is illustrated within the first window 702. In this embodiment, the display 700 comprises a first area, and the first window 702 and the second window 716 are both illustrated within the first area. The second window 716 may be presented in the display 700 upon the selection of an object by a user. For example, a user may select the representation of the second object 708, the indication 714 associated with the second object (if it is provided), or an area 707 near the representation of the second object 708. Upon the selection of a representation of an object by a user, an indicator may be sent to a processor to indicate that the user has selected the representation of the object within the display. After receiving the indicator that the user has selected a representation of the object within the display, the processor may cause the presentation of an indication of additional object characteristics for the object in the display. In the embodiment presented in FIG. 5B, the additional object characteristics comprise the designated object number (and/or a title) for the object, what type of object is illustrated, and the speed and direction of the object. In some embodiments, this speed may be relative to the speed of the watercraft, but the actual speed may be provided in other embodiments.

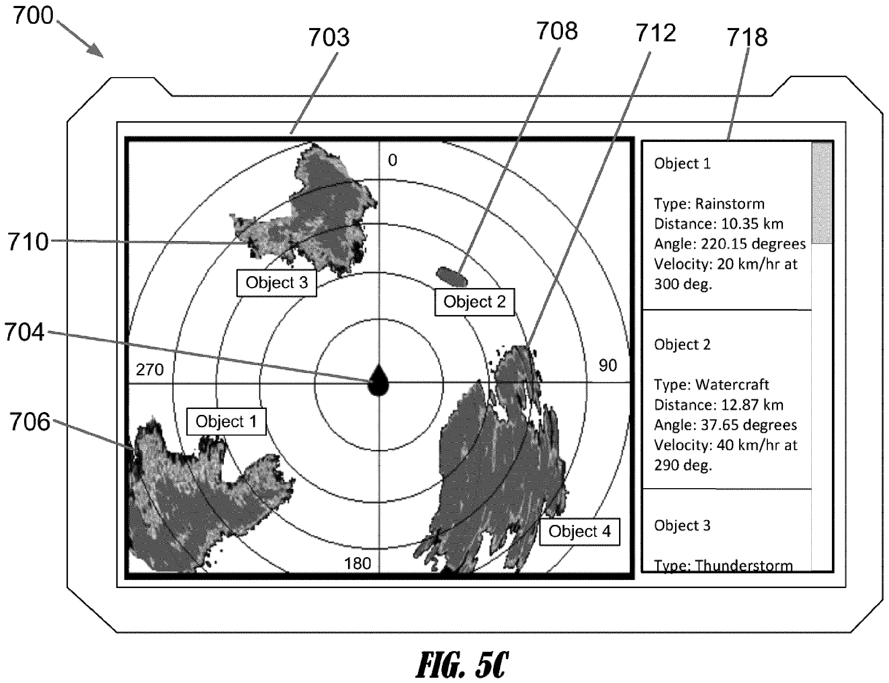

FIG. 5C presents another example display 700 with a first area 703 and a second area 718. In this embodiment, radar data is presented within the first area 703 with various objects represented. Indications of one or more object characteristics are provided in the second area 718, and corresponding links to each representation of the object within the radar data are provided via an object designation number (although other linking descriptors are contemplated). This second area 718 is separate from the first area 703.

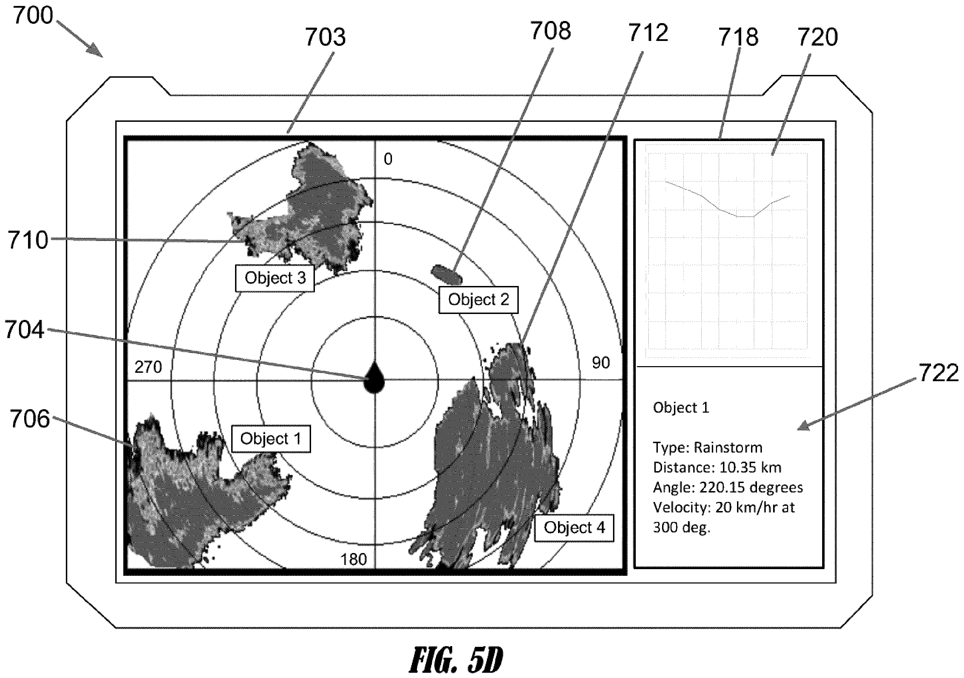

FIG. 5D illustrates another example embodiment. A second area 718 may be provided with graphical information 720 and/or textual information 722. Textual information 722 may comprise the object number or a name associated with the object. Textual information 722 may also comprise the type of object, the distance of the object from the watercraft of the user, the angle of the object relative to the forward direction of the user's watercraft, and the velocity of the object (if any). Other textual information may also be presented, including, but not limited to, the longitude and latitude of an object, information saved in memory by a user that is associated with the object, and statistical information about the object. Statistical information may include the probability of the object falling within the expected path of the user's watercraft, the predicted size of the object, the intensity of a storm, and the anticipated chance of precipitation, among other things. Graphical information 720 may also be provided. This may present information about the watercraft or an object. For example, the graphical information 720 may be the velocity of an object, the likelihood that the object will fall within the expected path of the user's watercraft, etc. While a line graph is presented in FIG. 71, graphical information 720 may take other forms.

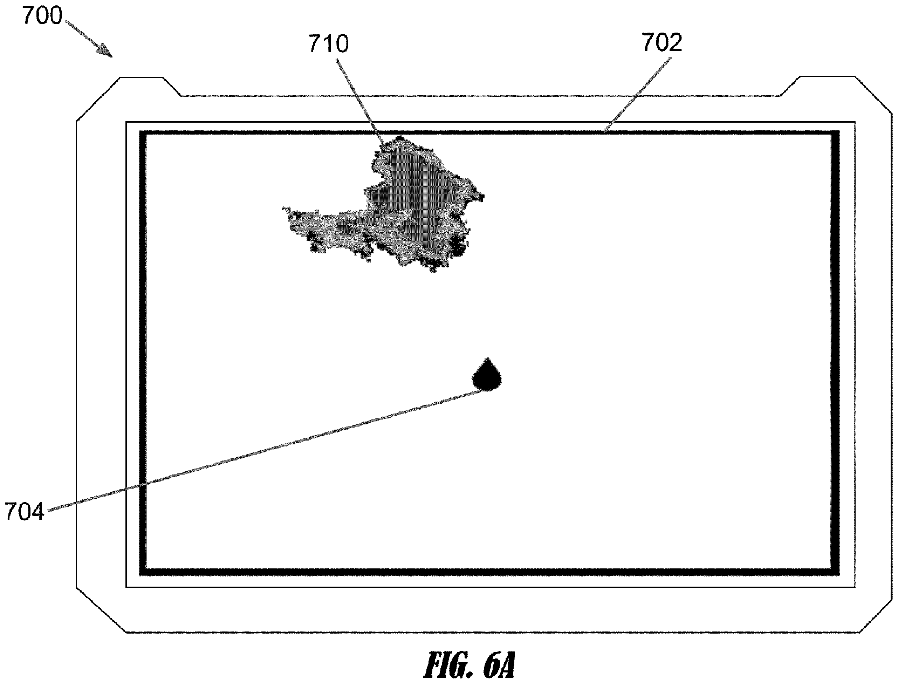

FIGS. 6A-6D present various ways that a representation of an object may be emphasized in the display 700 or ways that information may be presented about an object that is represented in the display 700. These embodiments may assist with quickly bringing representations of important objects to the attention of a user. Representation of objects may be emphasized if they are likely to fall within the expected path of the watercraft. However, representations of objects may also be emphasized for other reasons. For example, representations of objects may be emphasized if they meet a certain criteria that is selected by a user such as if they are travelling above a threshold velocity.

In FIG. 6A, the representation of the third object 710 is emphasized in the display 700. In this embodiment, the representation of the third object 710 is presented and the representations of the other objects are hidden within the display. By emphasizing the third object 710 in this way, the display 700 provides the user with information that is more readily understandable. In some embodiments, an indication of one or more object characteristics may be presented within the first window 702. By hiding other objects within the first window 702, more area is available where information may be presented about the object.

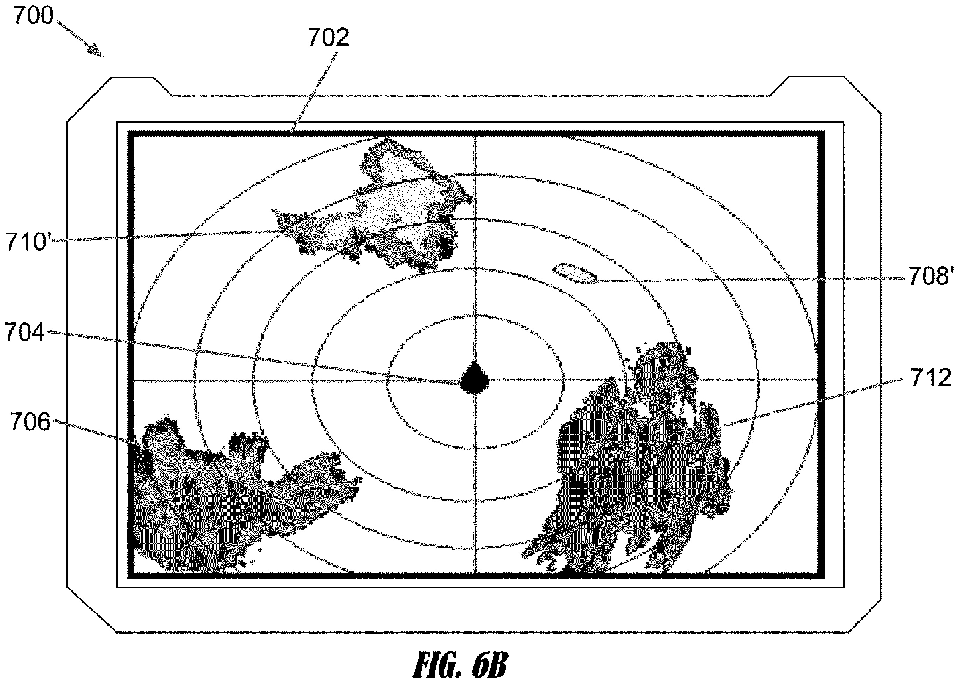

In FIG. 6B, the representation of the second object 708' and the representation of the third object 710' are both emphasized. In the illustrated embodiment, a processor may cause the color of the representation of the second object 708' and the representation of the third object 708', 710' to be changed. By changing the colors, the representations of the second and third objects 710' may be emphasized for the user. The color used to show emphasis may be any color, but it will preferably contrast well with the other colors presented in the display. For example, where objects are presented in black and white in the first window 702, the emphasis color may be gray or red. However, emphasis may be provided in other ways, such as by providing a pattern fill to the representation of an emphasized object. While two objects are emphasized by changing color in the illustrated embodiment, any number of objects may be emphasized in other embodiments.

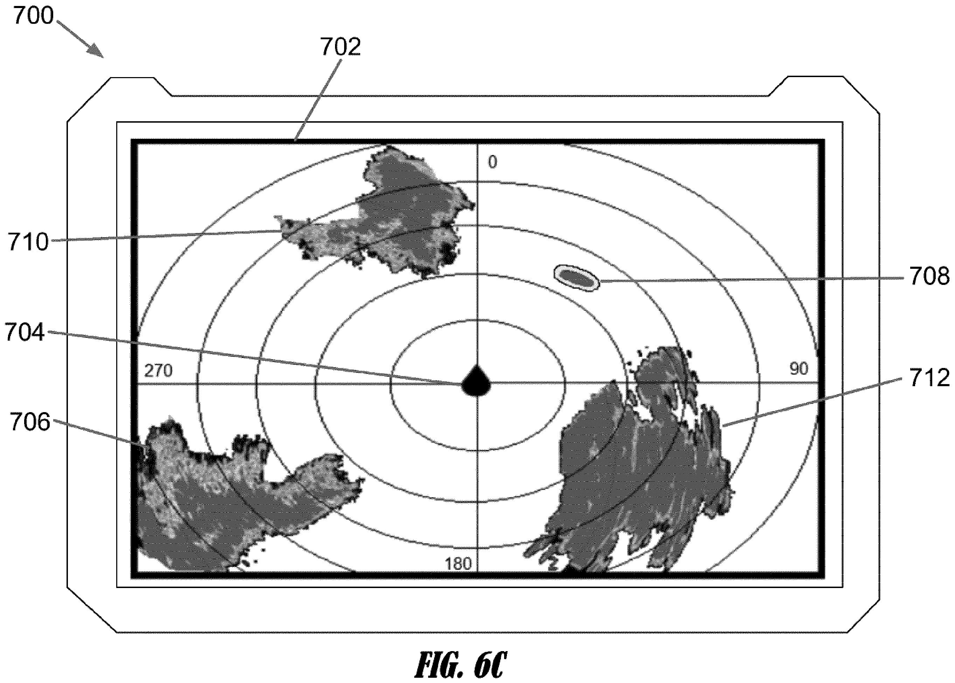

FIG. 6C illustrates an alternative approach for emphasizing the representation of an object within the display 700. In this embodiment, the representation of the second object 708 is emphasized by changing the color of an outline for the representation of the second object 708. The color used to show emphasis may be any color, but it will preferably contrast well with the other colors presented in the display. The emphasis may also be provided by providing dashed lines around the outline of the representation of the emphasized object as shown.

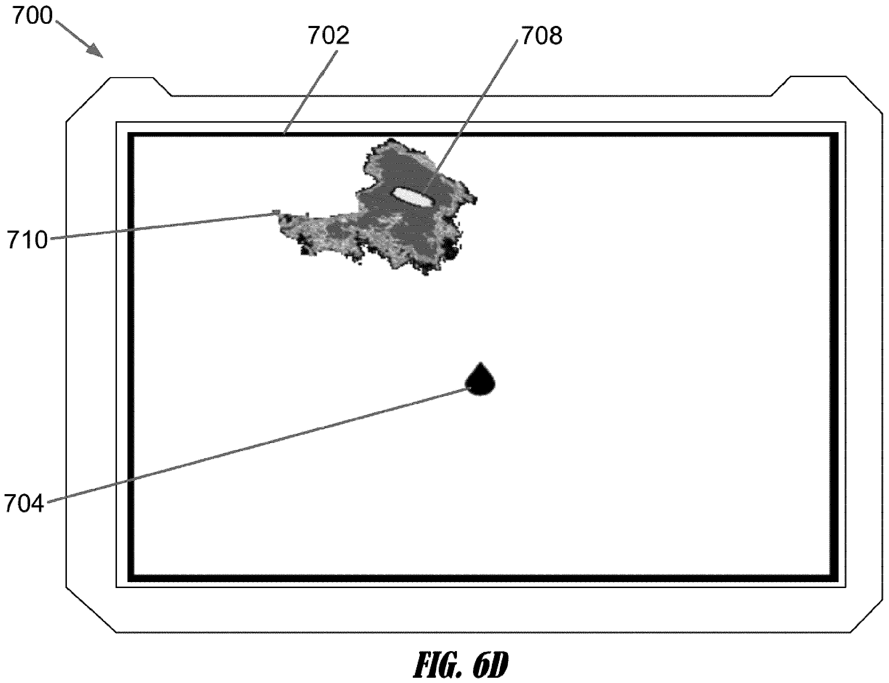

FIG. 6D illustrates an alternative approach for emphasizing the representation of an object within the display 700. In this embodiment, the representation of the second object 710 is emphasized by bringing the representation of the second object 710 to the front of the other objects presented in the first window 702. The representation of the second object 710 is presented on top of the representation of the third object 710, and an outline may be provided for the representation of the fourth object 712 or the color of the representation may be altered so that the representation of the two objects can be easily distinguished.

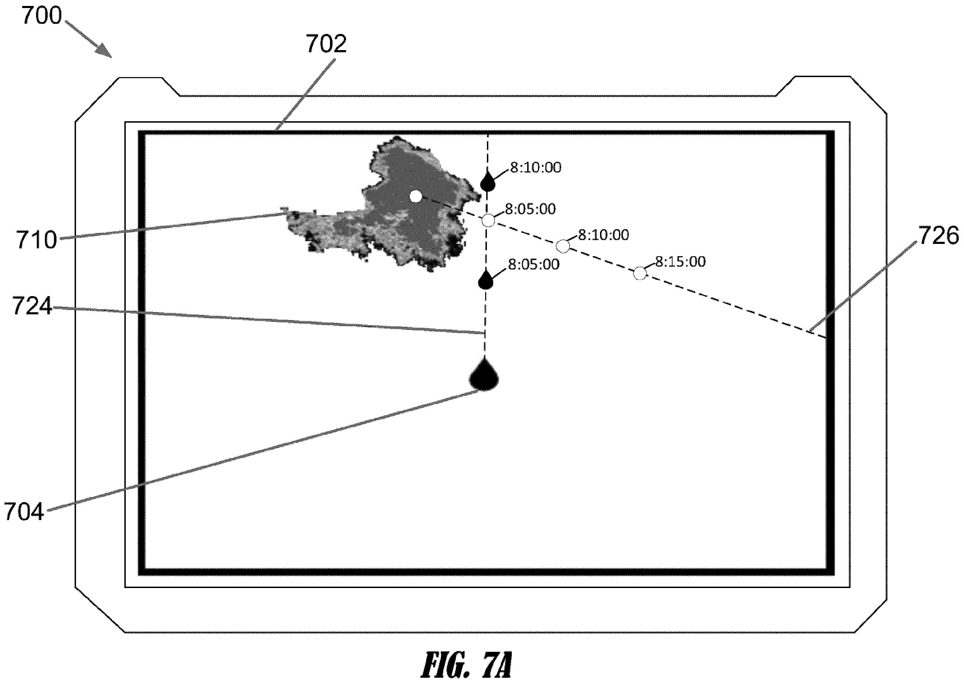

In FIGS. 7A-7E, the first object is expected to fall within the first expected path 724 of the watercraft. These figures illustrate various approaches for presenting this information to a user in the display 702. By presenting information such as the expected paths of a watercraft and objects around the watercraft, users may quickly make important navigational decisions with the necessary information at their fingertips.

In FIG. 7A, the first expected path 724 of the watercraft and the expected object path 726 are presented. Thus, the user can quickly see that these two paths will intersect and can adjust the direction or speed of the watercraft accordingly. Furthermore, representations may also be provided for a predicted future position of the watercraft and/or the predicted future position of the object, and a time may be provided proximate to the representations. In this way, a user may be better equipped to determine the likelihood that the object will collide or interfere with the first expected path 724 of the watercraft. In FIG. 7A, only a representation of the object 710 is provided. By doing so, the representation of the object 710 may be emphasized so that the user can clearly detect the object and so that the user may be able to clearly see the expected paths for the object and the watercraft. However, in other embodiments, additional objects may be represented within the first window 702, and an expected object path may be provided for some or all of the objects represented within the first window 702. In some embodiments, an expected object path may be provided for an object only if that object is likely to fall within the first expected path of the watercraft. For example, if the likelihood of this exceeds 50%, then an expected object path may be presented.

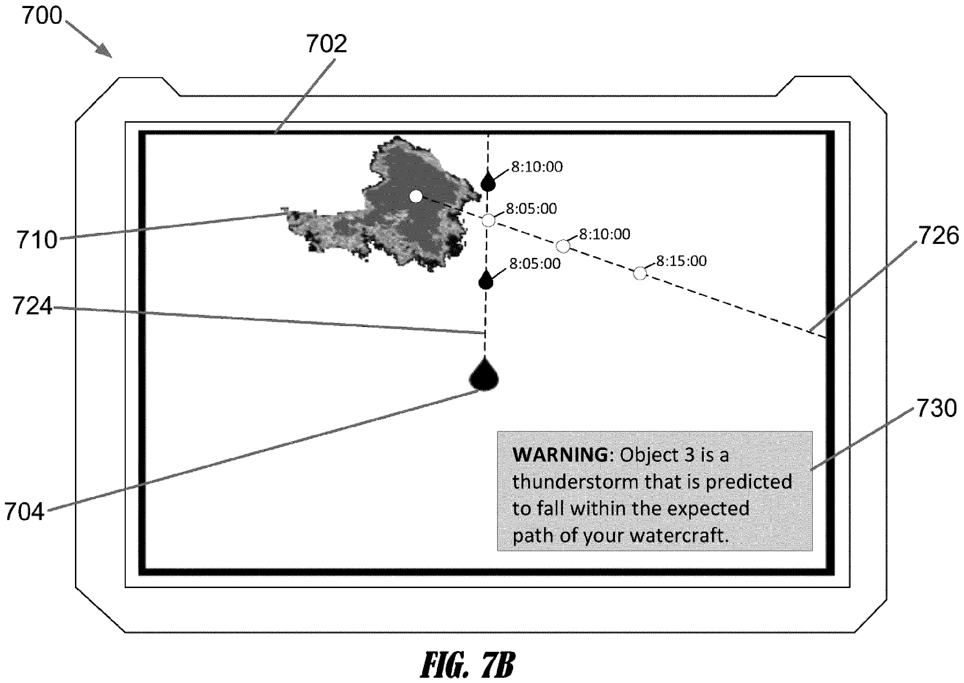

In FIG. 7B, a warning 730 is presented that one or more objects are predicted to be located within the first expected path 724 of the watercraft. Thus, this system alerts the user and leaves it to the user to determine the appropriate corrective action based on the information provided.

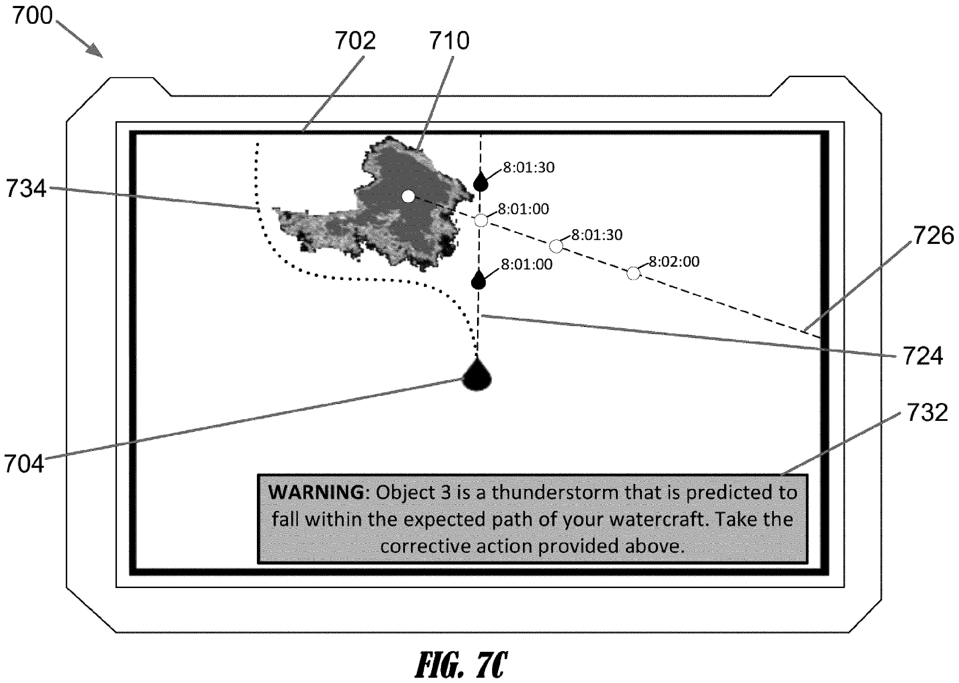

In some embodiments, the system or machine electronic device may also determine an appropriate corrective action to take to avoid any collision with or interference by an object. This corrective action may be an appropriate change in the velocity at the current time, but the corrective action may also be an appropriate change in the velocity at a specified time in the future. In FIG. 7C, a warning 732 is presented comprising information on a recommended corrective action. Further, within the first window 702, a second expected path of the watercraft 734 is illustrated. This second expected path 734 represents the path that the watercraft would take if the recommended corrective action is taken. In some embodiments, further textual information (e.g., specific navigation instructions) on corrective actions may be presented in the warning 732 as well and/or ability to automatically navigate such as through an autopilot may be provided.

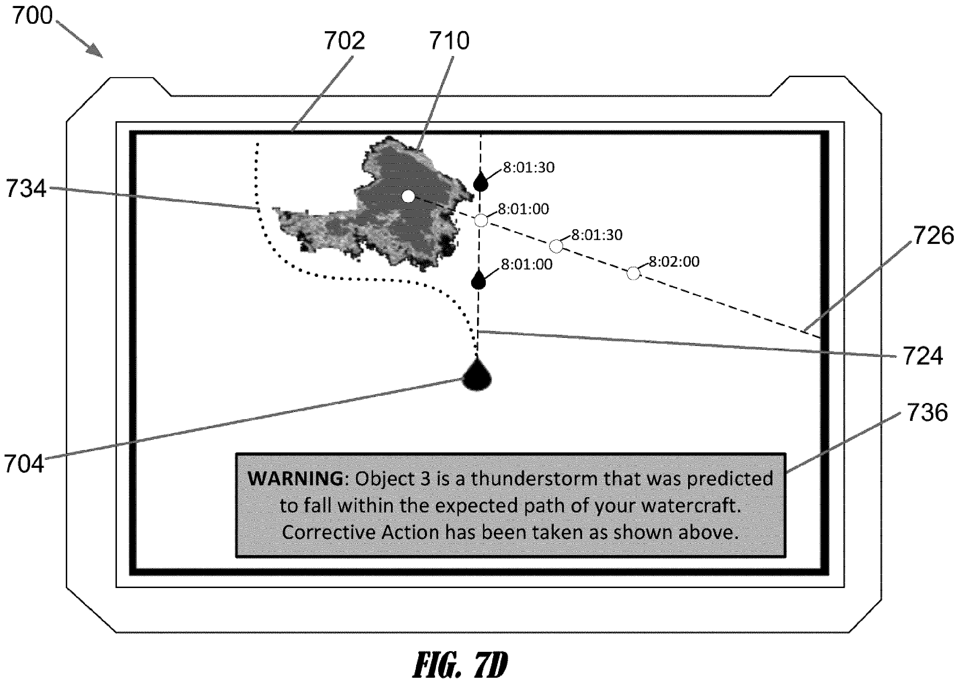

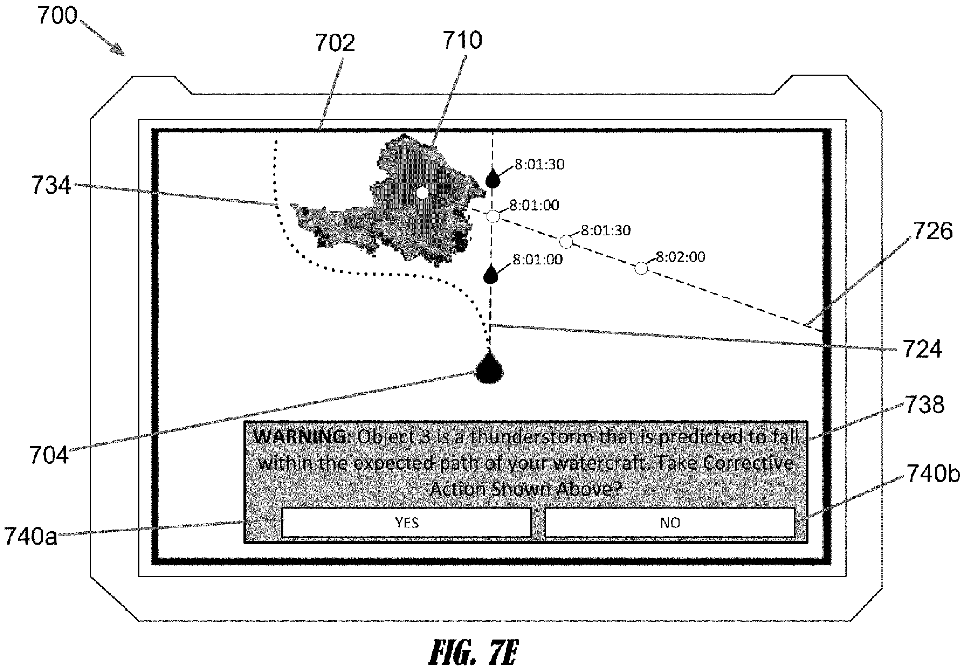

In some embodiments, the system may automatically take the corrective action, such as by engaging an autopilot. FIG. 7D illustrates an example embodiment where the system or marine electronic device determined an appropriate corrective action and is automatically making the corrective action. Where this automatic correction is made, in some embodiments, a warning 736 may be presented to alert the user that the path of the watercraft has been altered, will be altered, or is currently being altered. Alternatively, as illustrated in FIG. 7E, the system or marine electronic device may determine an appropriate corrective action and wait for user input before making the corrective action. Input buttons 740a, 740b may be provided within a presented warning 738, and the user may select whether they would like to take the corrective action.

The above described embodiments provide just some example display features for indicating one or more object characteristics, and embodiments of the present invention contemplate many different ways to indicate the determined object characteristics to provide easy to interpret radar data.

### Example System Architecture

FIG. 8 illustrates a block diagram of an example system 800 of various embodiments of the present invention described herein. This advantageously provides for the use of a wide variety of inputs, and these inputs may be utilized to receive data that may be used to assist in the determination of object characteristics, expected paths for the watercraft and/or objects around the watercraft, and to provide other navigational information to the user so that they user may make well-informed decisions. This also permits inputs to be provided via several different means, as devices may communicate with a processor within a marine electronic device via a wired connection, a wireless connection, or a connection through an external network.

The illustrated system 800 includes a marine electronic device 805. The system 800 may comprise numerous marine devices. As shown in FIG. 8, a transducer assembly 862, a radar 856, a rudder 857, a primary motor 858, a trolling motor 859, and additional sensors/devices 860 may be provided as marine devices, but other marine devices may also be provided. One or more marine devices may be implemented on the marine electronic device 805 as well. For example, a position sensor 845, a direction sensor 848, an autopilot 850, and other sensors 852 may be provided within the marine electronic device 805. These marine devices can be integrated within the marine electronic device 805, integrated on a watercraft at another location and connected to the marine electronic device 805, and/or the marine devices may be implemented at a remote device 854 in some embodiments. The system 800 may include any number of different systems, modules, or components; each of which may comprise any device or means embodied in either hardware, software, or a combination of hardware and software configured to perform one or more corresponding functions described herein.

The marine electronic device 805 may include at least one processor 810, a memory 820, a communication interface 830, a user interface 835, a display 840, autopilot 850, and one or more sensors (e.g. position sensor 845, direction sensor 848, other sensors 852). One or more of the components of the marine electronic device 805 may be located within a housing or could be separated into multiple different housings (e.g., be remotely located).

The at least one processor 810 may be any means configured to execute various programmed operations or instructions stored in a memory device (e.g., memory 820) such as a device or circuitry operating in accordance with software or otherwise embodied in hardware or a combination of hardware and software (e.g. a processor operating under software control or the processor embodied as an application specific integrated circuit (ASIC) or field programmable gate array (FPGA) specifically configured to perform the operations described herein, or a combination thereof) thereby configuring the device or circuitry to perform the corresponding functions of the at least one processor 810 as described herein. In this regard, the at least one processor 810 may be configured to analyze electrical signals communicated thereto to provide or receive radar data from one or more radar devices and additional (e.g., secondary) data from other sources. For example, the at least one processor 810 may be configured to receive radar data and additional data, determine an expected position, velocity (if any), an object type for an object, and/or determine a corrective action based on the deviation.

In some embodiments, the at least one processor 810 may be further configured to implement signal processing. In some embodiments, the at least one processor 810 may be configured to perform enhancement features to improve the display characteristics of data or images, collect or process additional data, such as time, temperature, GPS information, waypoint designations, or others, or may filter extraneous data to better analyze the collected data. The at least one processor 810 may further implement notices and alarms, such as those determined or adjusted by a user, to reflect proximity of other vehicles (e.g. watercraft), approaching storms, etc.

In an example embodiment, the memory 820 may include one or more non-transitory storage or memory devices such as, for example, volatile and/or non-volatile memory that may be either fixed or removable. The memory 820 may be configured to store instructions, computer program code, radar data, and additional data such as sonar data, chart data, location/position data in a non-transitory computer readable medium for use, such as by the at least one processor 810 for enabling the marine electronic device 805 to carry out various functions in accordance with example embodiments of the present invention. For example, the memory 820 could be configured to buffer input data for processing by the at least one processor 810. Additionally or alternatively, the memory 820 could be configured to store instructions for execution by the at least one processor 810.

The communication interface 830 may be configured to enable communication to external systems (e.g. an external network 802). In this manner, the marine electronic device 805 may retrieve stored data from a remote device 854 via the external network 802 in addition to or as an alternative to the onboard memory 820. Additionally or alternatively, the marine electronic device 805 may transmit or receive data, such as radar signal data, radar return data, radar image data, path data or the like to or from a transducer assembly 862. In some embodiments, the marine electronic device 805 may also be configured to communicate with other devices or systems (such as through the external network 802 or through other communication networks, such as described herein). For example, the marine electronic device 805 may communicate with a propulsion system of the watercraft 100 (e.g., for autopilot control); a remote device (e.g., a user's mobile device, a handheld remote, etc.); or another system.

The communications interface 830 of the marine electronic device 805 may also include one or more communications modules configured to communicate with one another in any of a number of different manners including, for example, via a network. In this regard, the communications interface 830 may include any of a number of different communication backbones or frameworks including, for example, Ethernet, the NMEA 2000 framework, GPS, cellular, Wi-Fi, or other suitable networks. The network may also support other data sources, including GPS, autopilot, engine data, compass, radar, etc. In this regard, numerous other peripheral devices (including other marine electronic devices or transducer assemblies) may be included in the system 800.

The position sensor 845 may be configured to determine the current position and/or location of the marine electronic device 805 (and/or the watercraft 100). For example, the position sensor 845 may comprise a GPS, bottom contour, inertial navigation system, such as machined electromagnetic sensor (MEMS), a ring laser gyroscope, or other location detection system. Alternatively or in addition to determining the location of the marine electronic device 805 or the watercraft 100, the position sensor 845 may also be configured to determine the position and/or orientation of an object outside of the watercraft 100.

The display 840 (e.g. one or more screens) may be configured to present images and may include or otherwise be in communication with a user interface 835 configured to receive input from a user. The display 840 may be, for example, a conventional LCD (liquid crystal display), a touch screen display, mobile device, or any other suitable display known in the art upon which images may be displayed.

In some embodiments, the display 840 may present one or more sets of data (or images generated from the one or more sets of data). Such data includes chart data, radar data, sonar data, weather data, location data, position data, orientation data, sonar data, or any other type of information relevant to the watercraft. Radar data may be received from radar 856 or from radar devices positioned at other locations, such as remote from the watercraft. Additional data may be received from marine devices such as a sonar transducer assembly 862, a primary motor 858 or an associated sensor, a trolling motor 859 or an associated sensor, an autopilot 850, a rudder 857 or an associated sensor, a position sensor 845, a direction sensor 848, other sensors 852, a remote device 854, onboard memory 820 (e.g., stored chart data, historical data, etc.), or other devices.

In some further embodiments, various sets of data, referred to above, may be superimposed or overlaid onto one another. For example, a route may be applied to (or overlaid onto) a chart (e.g. a map or navigational chart). Additionally or alternatively, depth information, weather information, radar information, sonar information, or any other navigation system inputs may be applied to one another.

The user interface 835 may include, for example, a keyboard, keypad, function keys, mouse, scrolling device, input/output ports, touch screen, or any other mechanism by which a user may interface with the system.

Although the display 840 of FIG. 8 is shown as being directly connected to the at least one processor 810 and within the marine electronic device 805, the display 840 could alternatively be remote from the at least one processor 810 and/or marine electronic device 805. Likewise, in some embodiments, the position sensor 845 and/or user interface 835 could be remote from the marine electronic device 805.

The marine electronic device 805 may include one or more other sensors/devices 852, such as configured to measure or sense various other conditions. The other sensors/devices 852 may include, for example, an air temperature sensor, a water temperature sensor, a current sensor, a light sensor, a wind sensor, a speed sensor, or the like.

The transducer assembly 862 illustrated in FIG. 8 includes one transducer array 867. In some embodiments, more transducer arrays could be included, or other transducer elements could be included. As indicated herein, the transducer assembly 862 may also include a sonar signal processor or other processor (although not shown) configured to perform various sonar processing. In some embodiments, the processor (e.g., at least one processor 810 in the marine electronic device 805, a controller (or processor portion) in the transducer assembly 862, or a remote controller - or combinations thereof) may be configured to filter sonar return data and/or selectively control transducer elements of the transducer array 867. For example, various processing devices (e.g., a multiplexer, a spectrum analyzer, A-to-D converter, etc.) may be utilized in controlling or filtering sonar return data and/or transmission of sonar signals from the transducer array 867.

The transducer assembly 862 may also include one or more other systems, such as various sensor(s) 866. For example, the transducer assembly 862 may include an orientation sensor, such as gyroscope or other orientation sensor (e.g., accelerometer, MEMS, etc.) that can be configured to determine the relative orientation of the transducer assembly 862 and/or the one or more arrays 867 - such as with respect to a forward direction of the watercraft. In some embodiments, additionally or alternatively, other types of sensor(s) are contemplated, such as, for example, a water temperature sensor, a current sensor, a light sensor, a wind sensor, a speed sensor, or the like.

The components presented in FIG. 8 may be rearranged to alter the connections between components. For example, in some embodiments, a marine device outside of the marine electronic device 805, such as the radar 856, may be directly connected to the at least one processor 810 rather than being connected to the communication interface 830. Additionally, sensors and devices implemented within the marine electronic device 805 may be directly connected to the communications interface in some embodiments rather than being directly connected to the at least one processor 810.

### Example Flowchart(s) and Operations

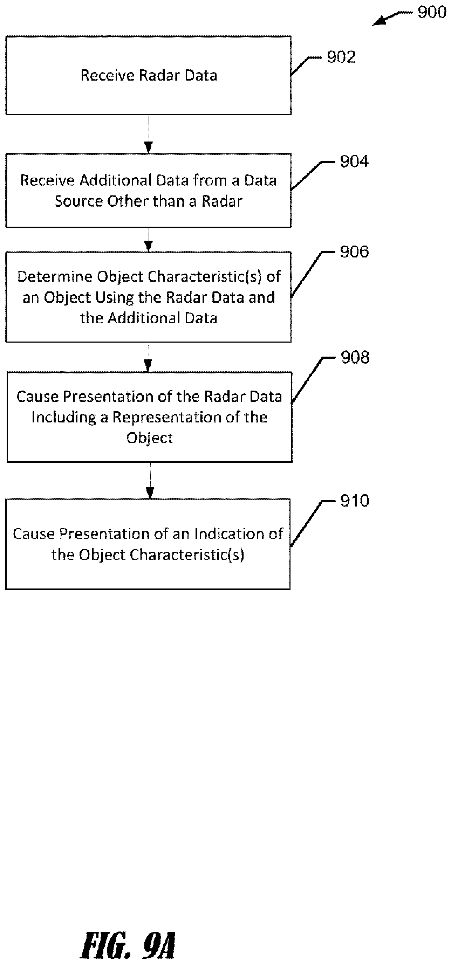

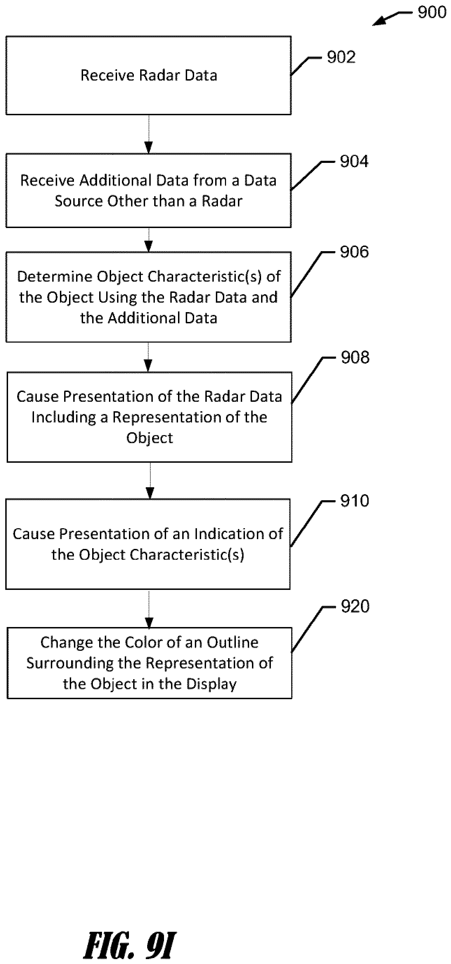

Some embodiments of the present invention provide methods, apparatus, and computer program products related to the presentation of information in a display according to various embodiments described herein. Various examples of the operations performed in accordance with embodiments of the present invention will now be provided with reference to FIGS. 9A-9M. FIGS. 9A-9M present various flowcharts with example methods of presenting one or more object characteristics in a display. These methods may be performed by a wide variety of components, including, but not limited to, one or more processors, one or more microprocessors, and one or more controllers. Further, these methods may be provided on a piece of software which runs on a central server that is at a remote location away from the watercraft, and the remote server may communicate with a processor or a similar component on the watercraft. Additionally, the methods could be integrated into a software update that may be installed onto existing hardware, or the methods may be integrated into the initial software or hardware provided in a radar unit, watercraft, server, etc. By performing these methods, the displays may present information in a readily understandable manner, with object characteristics clearly provided and with certain representations of objects being emphasized or distinguished from other representations of objects in the display. Further, these methods may provide critical information that is helpful in correcting the path of the watercraft to avoid the risk of dangerous contact with nearby objects.

FIG. 9A is a flowchart of an example method 900 for displaying radar data and indications of one or more object characteristics for objects that are represented in the radar data, in accordance with some embodiments discussed herein.

At operation 902, radar data is received. This radar data may comprise information including representations of one or more objects. At operation 904, additional data is received from a data source other than a radar. This additional data may comprise at least one of humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, or geographical data.

At operation 906, one or more object characteristics is determined for an object using the radar data and the additional data. The one or more object characteristics may comprise at least one of a type of the object, a direction the object is heading, or a velocity of the object, but other object characteristics may also be determined.

At operation 908, the presentation of radar data is caused, where the radar data includes a representation of the object. Radar data may be presented within the display similar to how radar data is presented within the displays in FIGS. 5A-7E.

At operation 910, the presentation of indications of the one or more object characteristics is caused. These one or more object characteristics correspond to the objects that are presented at operation 908.

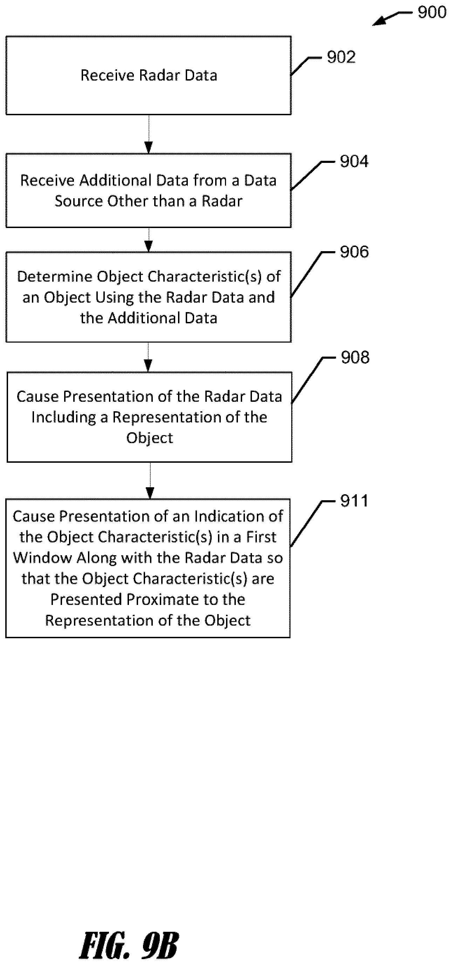

FIGS. 9B-9F illustrate variations of the example method illustrated in FIG. 9A. In FIG. 9B, operation 911 is performed rather than operation 910. At operation 911, the presentation of indications of the one or more object characteristics is caused. The presentation of indications of the one or more object characteristics is caused in a first window along with the radar data. The presentation of indications of the one or more object characteristics is caused proximate to the representation of an object within the first window. By performing this method, the radar data and the indications of one or more object characteristics may, for example, be presented as shown in FIG. 5A.

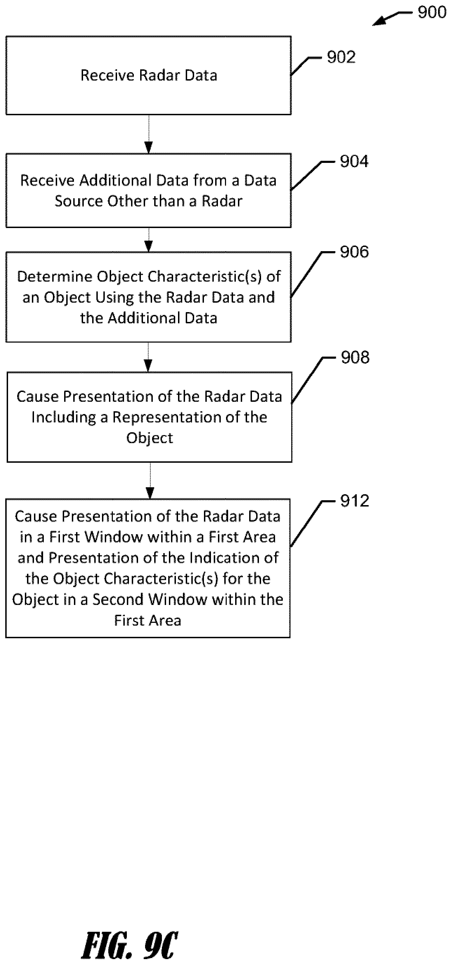

In FIG. 9C, operation 912 is performed rather than operation 910. At operation 912, the presentation of radar data is caused, with the radar data being presented in a first window. This first window may fall within a first area defined within the display. At operation 912, the presentation of indications of the one or more object characteristics is also caused. The indications of the one or more object characteristics are presented in a second window within the first area. By performing this method, this radar data and the indications of one or more object characteristics may, for example, be presented as shown in FIG. 5B. The second window may serve as a pop-up window that appears in front of the first window.

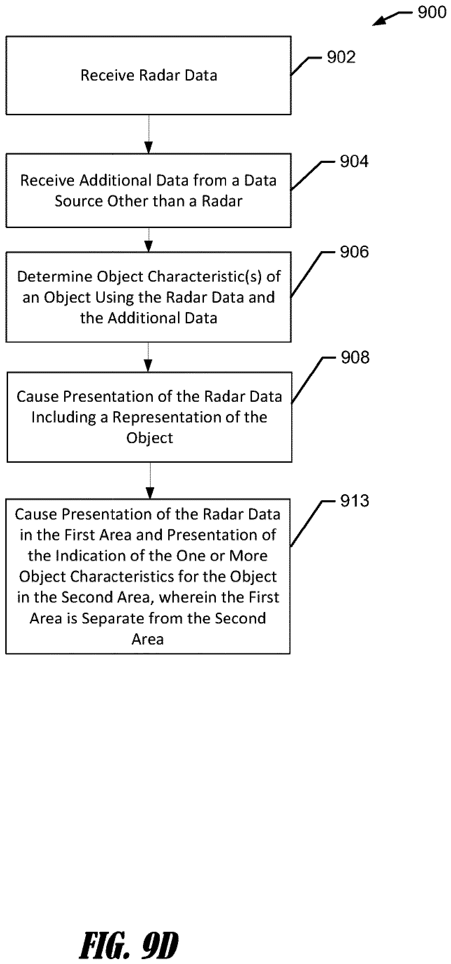

In FIG. 9D, operation 913 is performed rather than operation 910. At operation 913, the presentation of radar data is caused, with the radar data being presented in a first area. Additionally, the presentation of indications of the one or more object characteristics is also caused at operation 913. These indications are presented in a second area, with the second area being separate from the first area. By performing this method, this radar data and the indications of one or more object characteristics may, for example, be presented as shown in FIG. 5C.

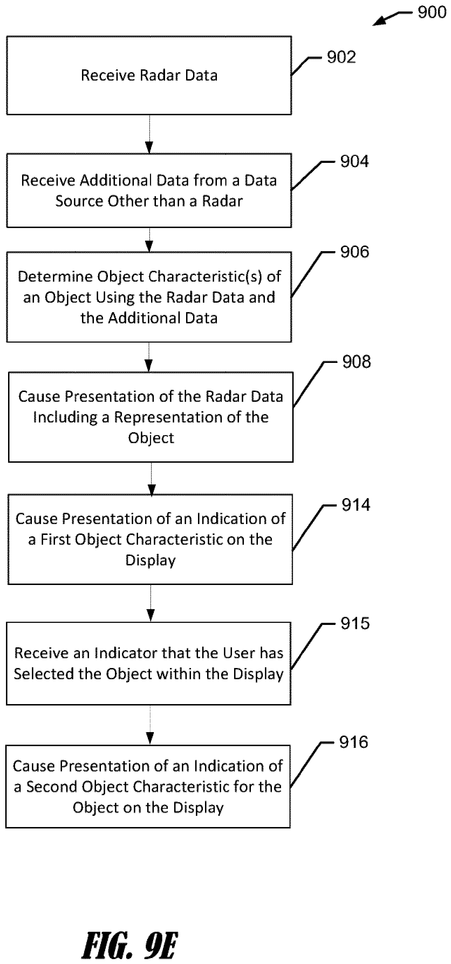

In FIG. 9E, operation 914, operation 915, and operation 916 are each performed rather than operation 910. At operation 914, the presentation of indications of a first object characteristic on the display is caused. This indication may be provided at any location, such as proximate to the representation of the relevant object, within the same area as the radar data, or in a separate area. At operation 915, an indicator may be received that the user has selected the object on the display. At operation 916, the presentation of an indication of a second object characteristic for the object on the display is caused. Again, this indication of the second object characteristic may be presented at various locations, and it may be presented at a different location than the indication of the first object characteristic. By performing this method, this radar data and the indications of multiple object characteristics may, for example, be presented as shown in FIG. 5B.

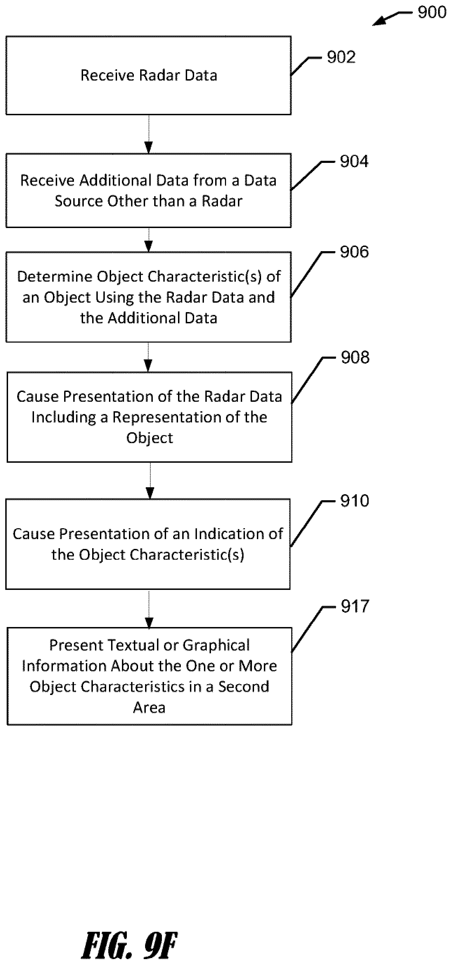

In FIG. 9F, operation 917 is performed in addition to the other operations presented in FIG. 9A. At operation 917, textual or graphical information about the one or more object characteristics is presented. This information is presented in a second area, and this second area may be separate from the first area where radar data is presented on the display. By performing this method, this radar data and the indications of multiple object characteristics may, for example, be presented as shown in FIG. 5D.

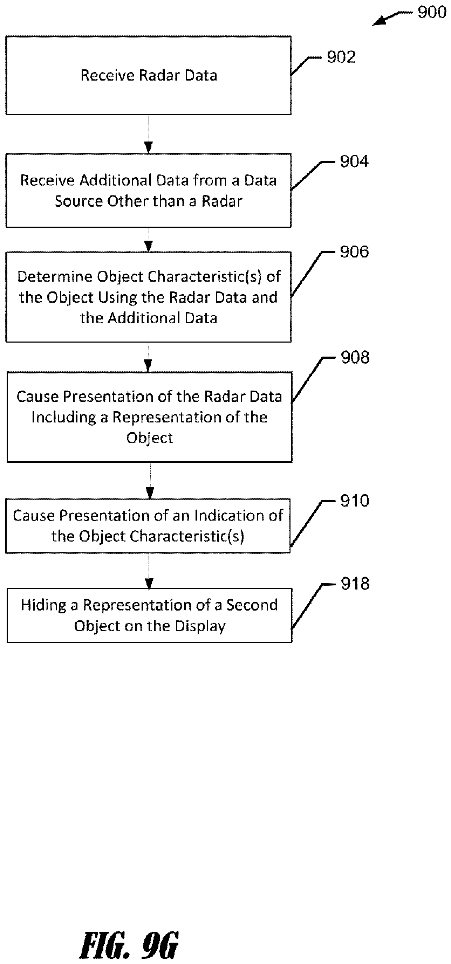

FIGS. 9G-9J illustrate flowcharts with example methods of presenting one or more object characteristics in a display, where the representation of one object is emphasized in the display. Each of these methods may be utilized to make the representations of relevant objects more readily detectable by a user. While several different approaches are described herein, other approaches for providing emphasis within the display may also be used.

In FIG. 9G, operation 918 is performed in addition to the other operations presented in FIG. 9A. At operation 918, a representation of a second object is hidden in the display. A representation of a first object is provided at operation 908. Thus, the first object represented within the display may be emphasized by hiding the second object, making the first object more readily detectable by the user. By performing this method, this radar data may, for example, be presented as shown in FIG. 6A.

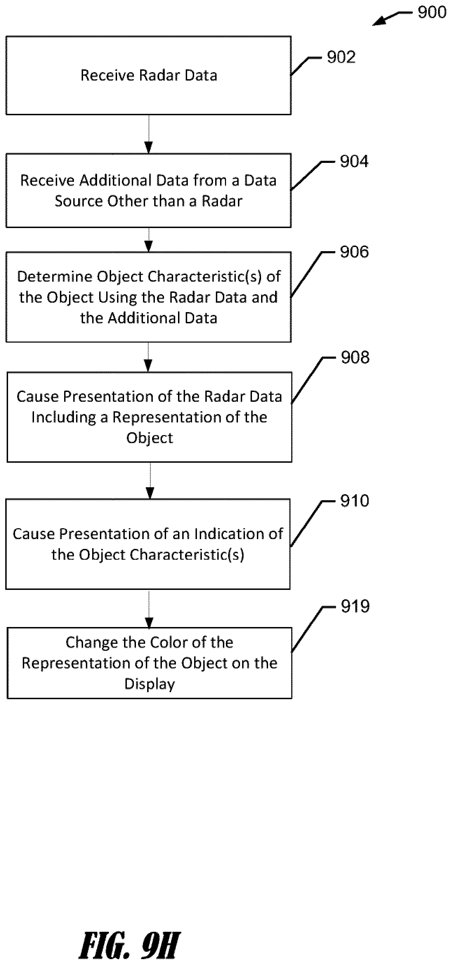

In FIG. 9H, operation 919 is performed in addition to the other operations presented in FIG. 9A. At operation 919, the color of the representation of an object on the display is changed. Thus, the representation of the object may be emphasized by contrasting the representation with other radar data. By performing this method, this radar data may, for example, be presented as shown in FIG. 6B.

In FIG. 91, operation 920 is performed in addition to the other operations presented in FIG. 9A. At operation 920, the color of the outline surrounding the representation of an object on the display is changed. Thus, the representation of the object may be emphasized by contrasting the representation with other radar data. By performing this method, this radar data may, for example, be presented as shown in FIG. 6C.

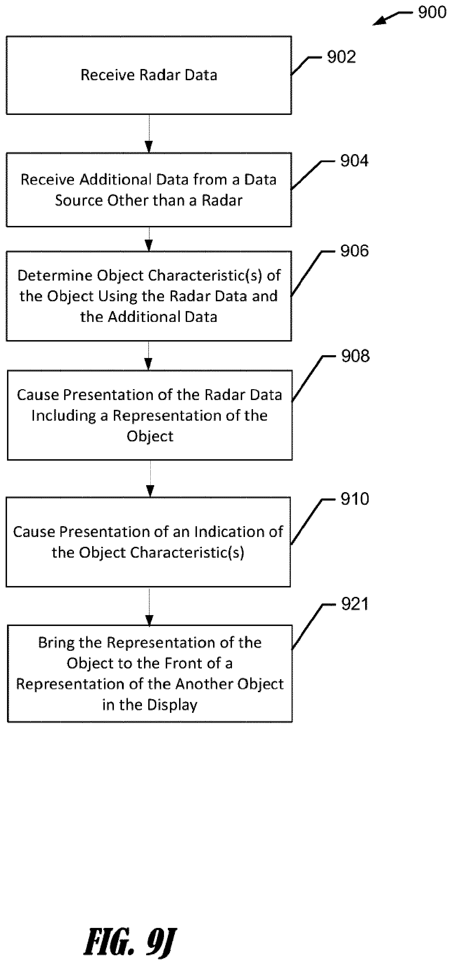

In FIG. 9J, operation 921 is performed in addition to the other operations presented in FIG. 9A. At operation 921, the representation of an object is brought to the front of a representation of another object in the display. By performing this method, this radar data may, for example, be presented as shown in FIG. 6D.

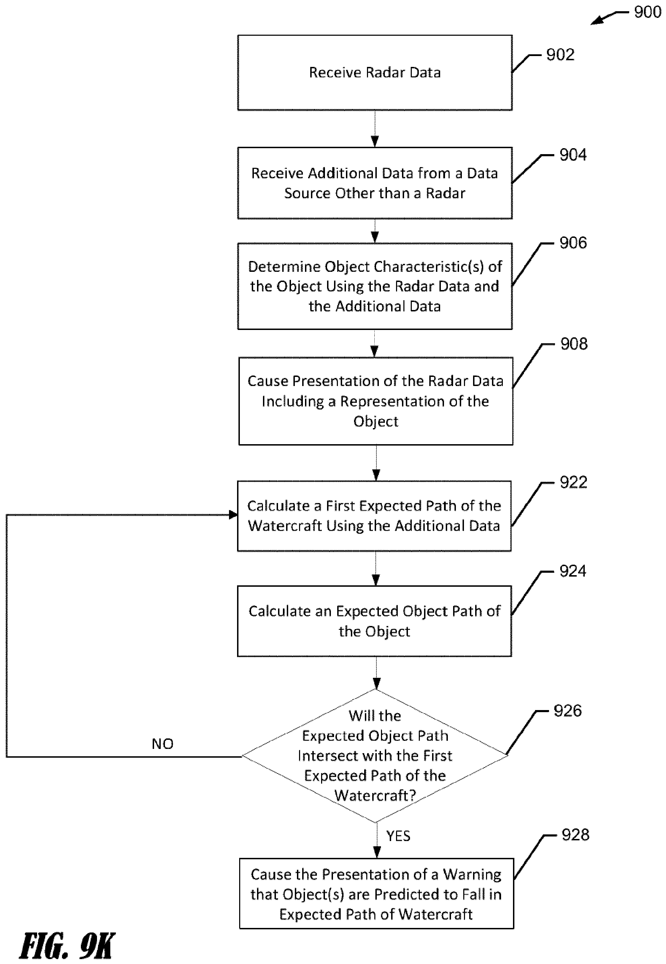

FIGS. 9K-9M illustrate flowcharts with example methods of presenting one or more object characteristics in a display and with various approaches for implementing a corrective action. These methods may provide critical information that is helpful in correcting the path of the watercraft to avoid the risk of dangerous contact with nearby objects. The methods present this information in a readily understandable manner so that the user may promptly make important decisions based on the presented information.

In FIG. 9K, operations 922, 924, 926, and 928 are performed. At operation 922, a first expected path of the watercraft is calculated using the additional data. This first expected path and other expected paths may be determined through the use of artificial intelligence, as discussed in conjunction with FIG. 2 herein. However, the expected paths may also be determined through other algorithmic approaches, where algorithms used to calculate the expected path may be preloaded in the system memory.

At operation 924, the expected object path of an object is calculated. This expected object path may also be calculated using the additional data. Then, a determination is made at operation 926, inquiring whether the expected object path will intersect with the first expected path of the watercraft. If the answer is no so that no intersection is expected, then the method 900 returns to operation 922 and proceeds from there. If the answer is yes so that an intersection is expected, then the method 900 proceeds to operation 928. At operation 928, a presentation of a warning is caused, and this warning alerts the user that the one or more objects are predicted to fall in the expected path of the watercraft. In this way, the user may be alerted about a potential risk of contact with nearby objects such as weather formations or other watercraft, and the user may take appropriate steps to alter the course of the watercraft based on the information provided. By performing this method, this display may, for example, be presented as shown in FIG. 7B.

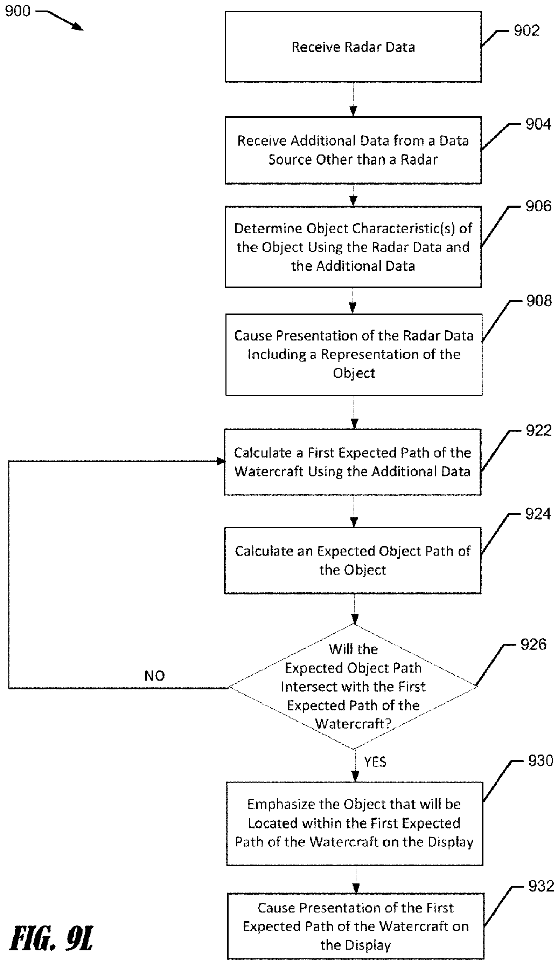

In FIG. 9L, operations 930 and 932 are performed rather than operation 928. After determining that the expected object path will intersect with the first expected path of the watercraft, operation 930 is performed. At operation 930, a representation of an object that is predicted to fall within the first expected path of the watercraft is emphasized on the display. This emphasis may be done in a variety of ways. For example, the approaches illustrated in FIGS. 6A-6D may be taken to emphasize the representation of the object, but other approaches may also be taken. At operation 932, the presentation of a first expected path of the watercraft is caused on the display. In this way, the user may promptly view the display provided to determine the appropriate action to minimize any risk of contact with the approaching object. By performing this method, this display may, for example, be presented as shown in FIG. 7B.

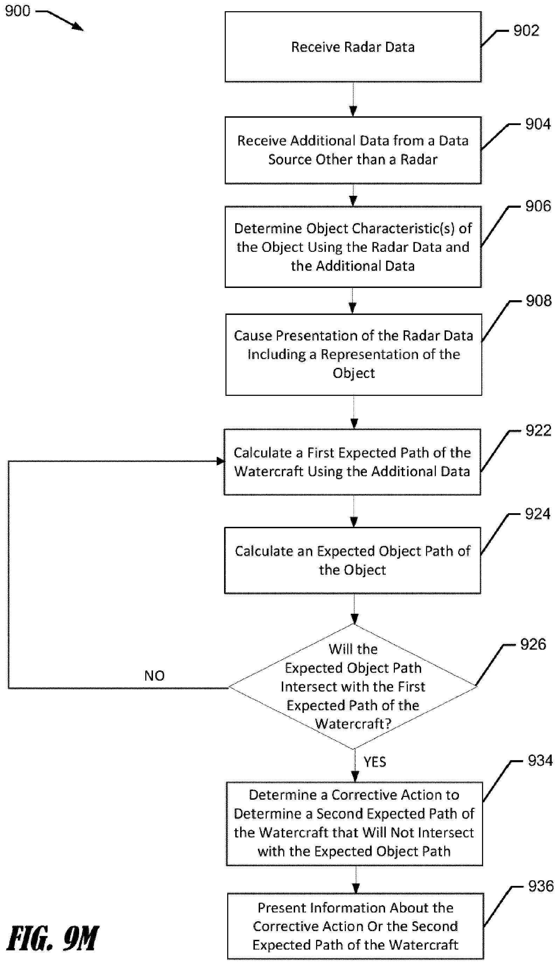

In FIG. 9M, operations 934 and 935 are performed rather than operation 928. After determining that the expected object path will intersect with the first expected path of the watercraft, operation 934 is performed. At operation 934, a corrective action is determined that will provide a second expected path of the watercraft. This second expected path of the watercraft will not intersect with the expected object path. In this way, the corrective action may be determined to assist in minimizing the potential risk of contact with nearby objects. At operation 936, information is presented about the corrective action and/or the second expected path of the watercraft. In this way, the user may be alerted about a potential risk of contact with nearby objects such as weather formations or other watercraft, and the user may take appropriate steps to alter the course of the watercraft to minimize this risk based on the recommended corrective action. By performing this method, this display may, for example, be presented as shown in FIGs. 7C-7E.

While various methods have been described herein, additional steps may be performed, or the described methods may be combined together. For example, the methods described in FIGS. 9G-9J may be combined together to strongly emphasize certain representations of objects. Further, unless otherwise indicated, the operations described in the embodiments may be performed in different orders or certain operations may be performed simultaneously. For example, radar data and additional data may both be received simultaneously, or additional data may be received before radar data.

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A system for display of radar data, wherein the system comprises:
a radar configured to provide radar data;
a processor;
a display configured to present the radar data; and
a memory including computer program code configured to, when executed, cause the processor to:
receive the radar data, wherein an object is represented within the radar data;
receive additional data from a data source other than the radar;
determine one or more object characteristics of the object using the radar data and the additional data, wherein the one or more object characteristics comprises at least one of a type of the object, a direction the object is heading, or a velocity of the object; and
cause presentation of:
the radar data including a representation of the object; and
an indication associated with the representation of the object, wherein the indication details the one or more object characteristics corresponding to the object, wherein the indication is presented in relation to the object.

2. The system of claim 1, wherein the additional data comprises at least one of humidity data, temperature data, pressure data, precipitation data, water current data, weather data, sonar data, GPS data, compass data, heading sensor data, position data for a watercraft, directional data for a watercraft, directional data from a motor or a rudder of a watercraft, image data from a camera, data regarding the date or time, navigational data, or geographical data.

3. The system of claim 1 or claim 2, wherein the one or more objects comprises at least one of a land mass, a cloud, a wind concentration, a rainstorm, a thunderstorm, or a floating object.

4. The system of any one of the preceding claims, wherein the memory including computer program code is further configured to, when executed, cause the processor to cause presentation of the indication of the one or more object characteristics for the object in a first window along with the radar data and such that the indication of the one or more object characteristics is presented proximate to the representation of the object.

5. The system of any one of claims 1 to 3, wherein the display comprises at least a first area, wherein the memory including computer program code is further configured to, when executed, cause presentation of the radar data in a first window within the first area and presentation of the indication of the one or more object characteristics in a second window within the first area.

6. The system of any one of claims 1 to 3, wherein the display comprises at least a first area and a second area, wherein the memory including computer program code is further configured to, when executed, cause presentation of the radar data in the first area and presentation of the indication of the one or more object characteristics in the second area, wherein the first area is separate from the second area.

7. The system of any one of the preceding claims, wherein the one or more object characteristics comprises at least two object characteristics, wherein the computer program code is configured to, when executed, cause the processor to:
cause presentation of the indication of a first characteristic for the object on the display;
receive an indicator that the user has selected the object within the display; and
cause, in response to receiving the indicator, the presentation of an indication of a second object characteristic for the object on the display.

8. The system of any one of the preceding claims, wherein the processor is configured to utilize a model developed through artificial intelligence, said model being formed based on historical comparisons of additional data and the radar data, wherein the processor is configured to input the radar data and the additional data into the model to determine the one or more object characteristics.

9. The system of claim 8, wherein the computer program code is configured to, when executed, cause the processor to cause presentation of the indication of the one or more object characteristics by:
causing the presentation of the representation of the object and hiding a representation of a second object on the display;
changing color of the representation of the object in the display;
changing color of an outline surrounding the representation of the object in the display;
bringing the representation of the object in front of a representation of another object in the display; or
presenting textual or graphical information about the one or more object characteristics.

10. The system of claim 8, wherein the system is configured to be implemented on a watercraft and wherein the computer program code is configured to, when executed, cause the processor to:
calculate a first expected path of the watercraft;
calculate an expected object path of the object;
determine whether the expected object path intersects with the first expected path of the watercraft; and
perform at least one of:
cause the presentation of a warning that the object is predicted to be located within the first expected path of the watercraft on the display;
cause emphasis of the object that will be located within the first expected path of the watercraft on the display;
cause presentation of the first expected path of the watercraft on the display; or
determine a corrective action using at least one of the radar data or the additional data, wherein the corrective action includes determination of a second expected path of the watercraft, wherein the expected object path does not intersect with the second expected path of the watercraft, and cause the processor to present information about at least one of the corrective action or the second expected path of the watercraft on the display.

11. A non-transitory computer readable medium having stored thereon software instructions that, when executed by a processor, cause the processor to generate display data by executing the steps comprising:
receive radar data, wherein an object is represented within the radar data;
receive additional data from a data source other than a radar;
determine one or more object characteristics of the object using the radar data and the additional data, wherein the one or more object characteristics comprises at least one of a type of the object, a direction the object is heading, or a velocity of the object; and
cause presentation of:
the radar data including a representation of the object; and
an indication associated with the representation of the object, wherein the indication details the one or more object characteristics corresponding to the object, wherein the indication is presented in relation to the object.
